Europäisches Patentamt

European Patent Office

Office européen des brevets

(11) Veröffentlichungsnummer: **0 085 879 B1**

# EUROPÄISCHE PATENTSCHRIFT

(45) Veröffentlichungstag der Patentschrift: **13.03.91**

(51) Int. Cl.⁵: **B60L 15/00**

(21) Anmeldenummer: **83100592.1**

(22) Anmeldetag: **24.01.83**

(54) **Vorrichtung zur inkrementalen Erfassung der Fahrzeuglage eines Magnetschwebefahrzeuges.**

(30) Priorität: **10.02.82 DE 3204615**
**30.03.82 DE 3211628**

(43) Veröffentlichungstag der Anmeldung:
**17.08.83 Patentblatt 83/33**

(45) Bekanntmachung des Hinweises auf die
Patenterteilung:
**13.03.91 Patentblatt 91/11**

(84) Benannte Vertragsstaaten:
**DE FR GB IT**

(56) Entgegenhaltungen:
**DE-A- 2 116 724        DE-A- 2 215 255**
**DE-A- 2 610 752        DE-A- 2 803 106**
**US-A- 3 526 886        US-A- 3 644 825**

**ETR, Band 30, Nr. 9, 1981, Seite 695, Hestra-Verlag, Darmstadt, DE; "Pollageerfassung für den synchronen Langstatormotor"**

**WISSENSCHAFTLICHE BERICHTE-AEG TELE-FUNKEN, Band 55, Nr. 1/2, 1982, Seiten 73-79, Frankfurt/Main, DE; W. HUBER: "Ein indukti-ves Pollage-Messverfahren bei Magnet-schwebebahnen"**

(73) Patentinhaber: **THYSSEN INDUSTRIE AG**
**Am Thyssenhaus 1**
**W-4300 Essen 1(DE)**

(72) Erfinder: **Miller, Luitpold**
**An der Ottosäule 5**
**W-8012 Ottobrunn(DE)**
Erfinder: **Knöll, Helmut, Dr.-Ing.**
**Rosenfeld 80**
**W-7121 Erligheim(DE)**
Erfinder: **Meins, Jürgen, Dr.-Ing.**
**Alte Poststrasse 18c**
**W-8011 Baldham(DE)**

(74) Vertreter: **Freiherr von Schorlemer, Reinfried,
Dipl.-Phys.**
**Patentanwalt Brüder-Grimm-Platz 4**
**W-3500 Kassel(DE)**

EP 0 085 879 B1

**EP 0 085 879 B1**

## Beschreibung

Die Erfindung betrifft eine Vorrichtung zur inkrementalen Erfassung der Fahrzeuglage eines Magnetschwebefahrzeugs, insbesondere mit Langstatormotor, mit wenigstens einer eine Pollagekodierung aufweisenden Meßleiste, die sich in Fahrtrichtung mit fester Lagezuordnung zur Statorwicklung erstreckt, und mit einem am Fahrzeug angeordneten Sensorsystem aus einem oder mehreren, in Fahrtrichtung mit Abstand angeordneten Sensoren zum Erfassen der Pollagekodierung.

Zur Stabilisierung der Vortriebskräfte bei einem Synchron-Langstator-Motor ist es notwendig, Informationen über die relative Lage des fahrzeugbezogenen Erregerfeldes und der Statorwicklungsverteilung zu gewinnen um die Phasenlage des schubbildenden Statorstrombelages definieren zu können. Darüber hinaus werden Informationen über die absolute Fahrzeuglage sowie die Fahrzeuggeschwindigkeit benötigt. Dabei ist es erforderlich, den mechanischen Luftspalt zwischen dem Tragmagneten und der Fahrschiene zu regeln.

Bei einem synchronen Linearmotor mit weggesteuerter Erregung ist es bekannt, längs des Stators eine kodierte Meßleiste anzuordnen, die im Bereich von Sensoren liegt, deren Meßsignale Sollwerte für den Erregerstrom liefern (DE-OS 21 16 724). Die Sensoren sind im Bereich der Erregerwicklung angeordnet, so daß die Meßsignale durch die Erregerströme selbst beeinflußt werden.

Zur Messung und Regelung des mechanischen Luftspaltes zwischen dem Magneten und der Tragschiene ist ein induktives Meßsystem bekannt, welches direkt zwischen dem Magneten und der Schiene angeordnet ist (DE-OS 28 03 877). Auch dieses Meßsystem wird durch den Magneten selbst beeinflußt.

Die kontinuierliche Erfassung der absoluten Fahrzeuglage, das heißt des Ortes des Fahrzeugs längs der Schiene, ist bisher durch Integration der Weginformation erfolgt. Trotz zuverlässiger Integrationsverfahren läßt jedoch eine solche Lagebestimmung zu wünschen übrig, weil Fehler nicht ausgeschlossen werden können, bzw. die Lageinformation zuverlässig gespeichert werden muß.

Aufgabe der Erfindung ist es, eine Vorrichtung der eingangs beschriebenen Gattung so zu verbessern, daß die relative und die absolute Fahrzeuglage mit großer Genauigkeit und weitgehend unbeeinflußt durch die Felder des Antriebs ermittelt werden können.

Diese Aufgabe wird dadurch gelöst, daß die Meßleiste neben der Pollagekodierung auch eine Fahrzeugabsolutagekodierung in Form einer in Längsrichtung des Fahrwegs beabstandeten Schlitzkodierung aufweist und ein weiteres Sensorsystem zum Erfassen der Fahrzeugabsolutagekodierung vorgesehen ist und daß die Sensoren unabhängig von den Feldern des Antriebssystems angeordnet sind und einerseits Meßwicklungen für die Pollagedekodierung und andererseits Meßwicklungen für die Schlitzdekocierung besitzen, wobei die Meßwicklungen für die Pollagedekodierung unter einem anderen Winkel zur Meßleiste angeordnet sind als die Meßwicklungen für die Schlitzdekodierung.

Erfindungsgemäß wird die Meßleiste so angeordnet, daß sie von Feldern des Antriebssystems weitgehend frei ist. Dementsprechend steigt die Empfindlichkeit der der Meßleiste zugeordneten Sensoren. Dadurch wird es wiederum möglich, Sensoren einzusetzen, die einerseits Meßwicklungen für die Pollagedekodierungen und andererseits Meßwicklungen für die Schlitzdekodierung besitzen, die also Felder, die zum Zwecke der Messung im Bereich der Meßleiste aufgebaut werden und die durch die Kodierung der Meßleiste beeinflußt werden, entkoppeln können.

Insbesondere können die Sensoren aus U- oder E-förmigen Kernen aufgebaut sein, deren Schenkel auf die Meßleiste gerichtet sind, wobei die Meßwicklungen für die Pollagedekodierung an den Schenkeln sowie die Meßwicklungen für die Schlitzdekodierung an den Stegen angeordnet sind. Damit läßt sich durch geometrische Anordnung der einzelnen Meßwicklungen bereits eine weitgehende Entkopplung der gewünschten Meßinformationen erreichen.

Die Meßsignale sind im übrigen groß genug, damit durch Differenzbildung der Meßsignale zweier benachbarter Meßwicklungen Störgrößen gleichsam eliminiert werden können. Dementsprechend sollen zwei benachbarte Stege eine Meßwicklung für die Schlitzdekodierung tragen.

Unabhängig davon ist es vorteilhaft, wenn zwei Sensorsysteme vorgesehen werden, die in Fahrtrichtung zueinander versetzt und mit unterschiedlichem Abstand zur Meßleiste angeordnet sind. Der unterschiedliche Abstand der Sensoren von der Meßleiste ermöglicht wiederum eine Differenzbildung, durch die Einflüsse des Abstandes der Sensoren von der Meßleiste durch Differenzbildung ausgeschaltet werden können.

Die beiden Sensorsysteme, die in Fahrtrichtung zueinander versetzt sind, insbesondere um eine halbe Polteilung der Statorwicklung zueinander versetzt sind, ermöglichen im übrigen die Bestimmung eines sogenannten Pollagevektors, der die relative Lage des Fahrzeugs zur Statorwicklung bestimmt.

Mit derartigen Sensoren läßt sich eine sehr einfach aufgebaute, kodierte Meßleiste abfragen. Die Pollagekodierung besteht zweckmäßig aus im Abstand der Polteilung der Statorwicklung angeordneten rechteckigen Ausnehmungen an der Meßleiste. Die Meßwicklungen für die Pollagedekodierung registrieren

2

dann die Änderungen eines auf der anderen Seite der Meßleiste aufgebauten Magnetfeldes beim Durchgang der Ausnehmungen bzw. der dazwischen befindlichen Zungen im wesentlichen als eine Grundschwingung, deren Frequenz der Polteilung der Statorwicklung entspricht.

Die Schlitzkodierung kann demgegenüber aus breiten Schlitzen bestehen, die an den zwischen den Ausnehmungen verbliebenen Zungen angeordnet sind. Durch diese Schlitzkodierung wird zwar die Pollagedekodierung etwas gestört, weil auch durch die Schlitze das auf der anderen Seite der Meßleiste aufgebaute Magnetfeld beeinflußt wird, die Störungen lassen sich aber auf einfache Weise dann beherrschen, wenn die Anzahl der Schlitze auf jeder Zunge konstant ist.

Im übrigen ist es zweckmäßig, wenn die Schlitze relativ zu einem konstanten Abstandsraster rechtsbündig oder linksbündig angeordnet sind, weil bei einem konstanten Abstandsraster die Störung der Pollageinformation am geringsten ist und im übrigen durch Anordnung der Schlitze rechts oder links der Rastergrenzen eine eindeutige Information erhalten werden kann.

Während die Meßsignale, die die Pollageinformation enthalten, analoge Signale mit hohem Auflösungsvermögen sind, liefern die Meßwicklungen für die Schlitzdekodierung digitale Meßsignale, die in üblicher Weise zur Bestimmung der absoluten Fahrzeuglage verarbeitet werden können.

Zur Verarbeitung der die Pollageinformation enthaltenen Meßsignale kann den Meßwicklungen für die Pollagedekodierung ein Phasen-Regelkreis zur Bildung eines Pollagevektors zugeordnet sein. Der Phasen-Regelkreis weist zweckmäßig einen Regler und einen durch dessen Ausgang gesteuerten Oszillator mit nachgeschaltetem Sinus/Kosinus-Konverter auf. Am Ausgang des Reglers entsteht ein Signal, welches der Fahrtgeschwindigkeit entspricht.

Weitere vorteilhafte Ausgestaltungen ergeben sich aus Unteransprüchen, die insbesondere eine Ausführung beschreiben, bei der die Meßleisten einen winkelförmigen Querschnitt besitzen, wobei der vertikale Schenkel der Meßleiste die Pollagekodierung und die Schlitzkodierung trägt, während der horizontale Schenkel der Meßleiste eine außerhalb des Tragmagneten liegende Bezugsebene zur Bestimmung des mechanischen Luftspaltes zwischen Tragmagnet und Schiene bildet.

Im folgenden werden in der Zeichnung dargestellte Ausführungsbeispiele der Erfindung erläutert; es zeigen:

Figur 1      in schematischer Darstellung einen Abschnitt eines Statorblechpaketes für einen synchronen Langstatormotor eines Magnetschwebefahrzeuges mit einem Abschnitt eines mit dem Fahrzeug verbundenen Tragmagneten,

Figur 1a      in schematischer Darstellung einen Schnitt in Richtung I-I durch den Gegenstand nach Figur 1,

Figur 2      in schematischer Darstellung einen Vertikalschnitt (entsprechend der Projektion in Figur 1a) durch Fahrweg und Magnetschwebefahrzeug,

Figur 3      in perspektivischer Darstellung einen Abschnitt einer Meßleiste,

Figur 4      in perspektivischer Darstellung einen Abschnitt einer anderen Meßleiste,

Figur 5      in perspektivischer Darstellung eine Meßeinrichtung zur Erfassung des mechanischen Luftspaltes zwischen Tragmagnet und Schiene,

Figur 6      ein Blockschaltbild einer Schaltung zum Auswerten der mit in der Meßeinrichtung nach Figur 5 gewonnenen Meßsignale,

Figur 7      in schematischer Darstellung eine Meßeinrichtung für die Pollagedekodierung,

Figur 8      eine andere Ausführung des Gegenstandes nach Figur 7,

Figur 9      charakteristische Signale der Meßeinrichtung nach Figur 8,

Figur 10      ein Blockschaltbild für die Bildung der aus den Fahrzeuglageinformationen abgeleiteten Größen auf dem Fahrzeug selbst und deren Übertragung zum Unterwerk,

Figur 11      entsprechend Figur 1 in schematischer Darstellung einen Abschnitt eines Statorblechpaketes für einen synchronen Langstatormotor mit zugeordneter kodierter Meßleiste sowie teilweise einen Tragmagneten und ein Sensorsystem zur Dekodierung,

Figur 12      einen Abschnitt der Meßleiste und das Sensorsystem mit weiteren Einzelheiten sowie ein Diagramm mit den von den Sensoren abgegebenen Meßsignalen,

Figur 13      einen Abschnitt der Meßleiste mit zusätzlicher Schlitzkodierung und den daraus ableitbaren Signalen,

Figur 14      in schematischer Darstellung einen Horizontalschnitt durch die Meßleiste und einen zugeordneten Sensor,

Figur 15      eine grafische und formelmäßige Darstellung des Pollagevektors mit einem Referenzvektor,

Figur 16      ein Blockschaltbild eines Phasen-Regelkreises zur Ermittlung des Pollagevektors,

Figur 17      das Blockschaltbild eines linearisierten Phasen-Regelkreises zur Ermittlung des Pollagewinkels,

Figur 18    ein Blockschaltbild für die Bestimmung der Fahrzeuggeschwindigkeit.

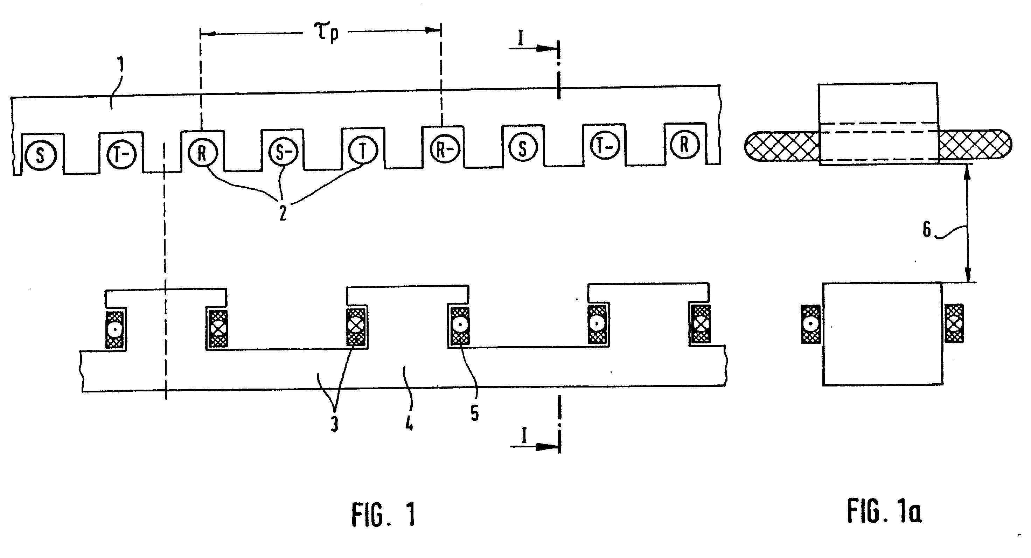

Anhand der Figuren 1 - 10 wird zunächst erläutert, wie aus den Signalen der Pollagedekodierung und aus den Signalen der Spaltmessung die für den Betrieb des Fahrzeuges gewünschten absoluten und relativen Fahrzeuglageinformationen erhalten werden können, und zwar mit einer Meßleiste ohne Schlitzdekodierung.

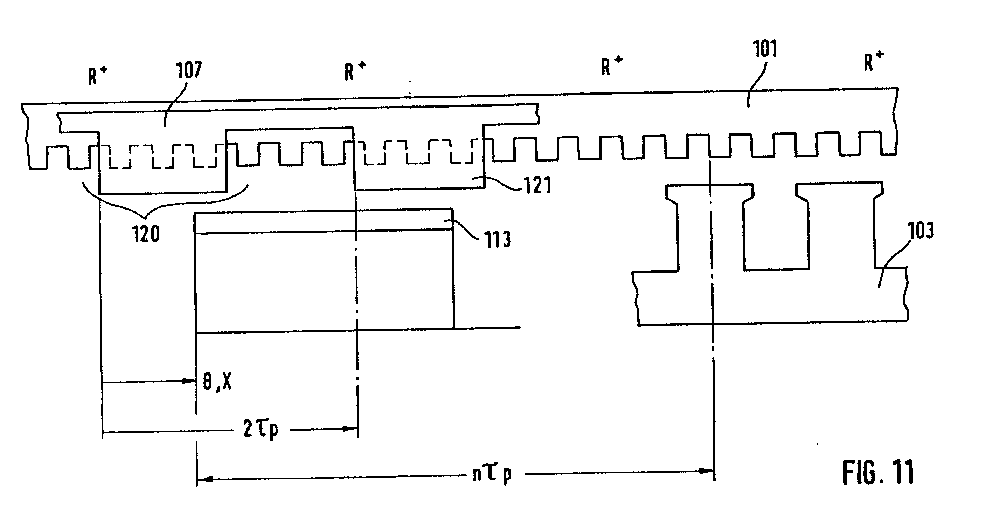

Im folgenden wird dann unter Bezugnahme auf die Figuren 11 - 18 eine Ausführung erläutert, bei der die Meßleiste zusätzlich eine Schlitzkodierung aufweist.

Bei einer Magnetschwebebahn mit synchronem Langstatormotor (Fig. 1) ist das Statorblechpaket 1 ortsfest mit dem Fahrweg verbunden. In die Nuten des Statorblechpakets 1 ist eine Drehstromwicklung 2 eingelegt, welche vom Antriebswechselrichter des Unterwerks mit Drehstrom variabler Amplitude und Frequenz gespeist wird, wodurch sich in bekannter Weise eine fortschreitende Strombelagswelle längs des Stators ausbildet. Zur Minimierung des Blindleistungs- und Spannungsbedarfs dieses Motors wird jeweils nur ein Teilstück der Statorwicklung 2 mit sogenannten Abschnittschaltern aktiviert, welche abhängig von der Lage des Fahrzeugs relativ zum Fahrweg betätigt werden. Das Erregerfeld der Langstator-Synchronmaschine wird durch die mit dem Fahrzeug verbundenen Tragmagnete 3, bestehend aus dem Magnetkern 4 und der Erregerwicklung 5 erzeugt. Neben der Funktion des magnetischen Tragens stellen die Tragmagnete somit gleichzeitig das Erregerfeld der Synchronmaschine bereit.

Zur Ausbildung der gewünschten Vortriebskraft ist es erforderlich, daß die Ausbreitungsgeschwindigkeit der Induktionswelle und damit auch die Fahrzeuggeschwindigkeit synchron mit der Ausbreitungsgeschwindigkeit der Strombelagswelle erfolgt. Die maximale Vortriebskraft ergibt sich bei vorgegebenen Amplituden der beiden Grundschwingungs-Wanderwellen, wenn die optimale relative Lage des fahrzeugbezogenen Erregerfeldes zur Statorwicklungsverteilung eingehalten wird.(Bei einem Synchron-Drehstrommotor entspräche dies der Einhaltung des optimalen Polradwinkels)

Dies kann durch geeignete Frequenzregelung des Antriebswechselrichters im Unterwerk erreicht werden, wobei die momentane Fahrzeuggeschwindigkeit und die relative Lage des Erregersystems 3 z.B. zur Phase R der Ständerwicklung 2 für die Steuerung des Antriebswechselrichters im Unterwerk als Meßgrößen vorliegen müssen.

Des weiteren sollte ein Fahrzeuglageerfassungssystem die Weichenorte sowie eventuelle Änderungen zur Phasenfolge der Ständerwicklung 2 erkennen können.

Zur Regelung des Schwebeabstandes 6 auf einen vorgegebenen Wert ist dieser, sowie dessen erste und zweite Ableitung nach der Zeit erforderlich. Durch die Nutung des Ständerblechpakets und deren Lamellierung gestaltet sich die berührungsfreie Erfassung dieser Größen außerordentlich schwierig und ist bislang noch nicht befriedigend gelöst.

Die für die Trag- und Antriebsregelung von Magnetschwebefahrzeugen mit Langstatormotor benötigten Meßgrößen

- Schwebeabstand und dessen erste und zweite Ableitung nach der Zeit
- Fahrzeuglage mit den daraus abzuleitenden Größen
1. relative Lage des Erregersystems zur Langstatorwicklung
2. Fahrtrichtung
3. Fahrzeuggeschwindigkeit
4. Fahrzeugort
5. Lageerkennung der Abschnittsschalter
6. Weichenort
7. Phasenfolge der Langstatorwicklung wurden bei bislang bekannt gewordenen Einrichtungen jeweils mit getrennten Einrichtungen erfaßt.

Dasselbe gilt für Kurzstatorfahrzeuge, bei denen jedoch die abzuleitenden Größen 1., 5. und 7. entfallen. Die vorgenannten auf die jeweilige Meßaufgabe zugeschnittenen Einrichtungen ergeben eine hohe Komplexität des Gesamtsystems und sind deshalb technisch und wirtschaftlich nicht befriedigend. Die vorliegende Erfindung versucht hier Abhilfe zu schaffen.

Dazu wird eine Meßleiste längs des Statorblechpakets angebracht, welche in einem unveränderlichen Abstand zur Zahnoberfläche des Statorblechpakets formschlüssig fixiert ist und in Ausbreitungsrichtung der Strombelagswelle eine feste Zuordnung zur Langstatorwicklung besitzt. Die definierte Lage der Meßleiste wird zweckmäßigerweise durch zusätzlich am Statorblechpaket eingebrachte Nuten und/oder entsprechenden Halterungen an den Befestigungsteilen der Statorwicklung mit einheitlichen Montageteilen ohne zusätzliche Justageeinrichtungen genau und eindeutig erreicht.

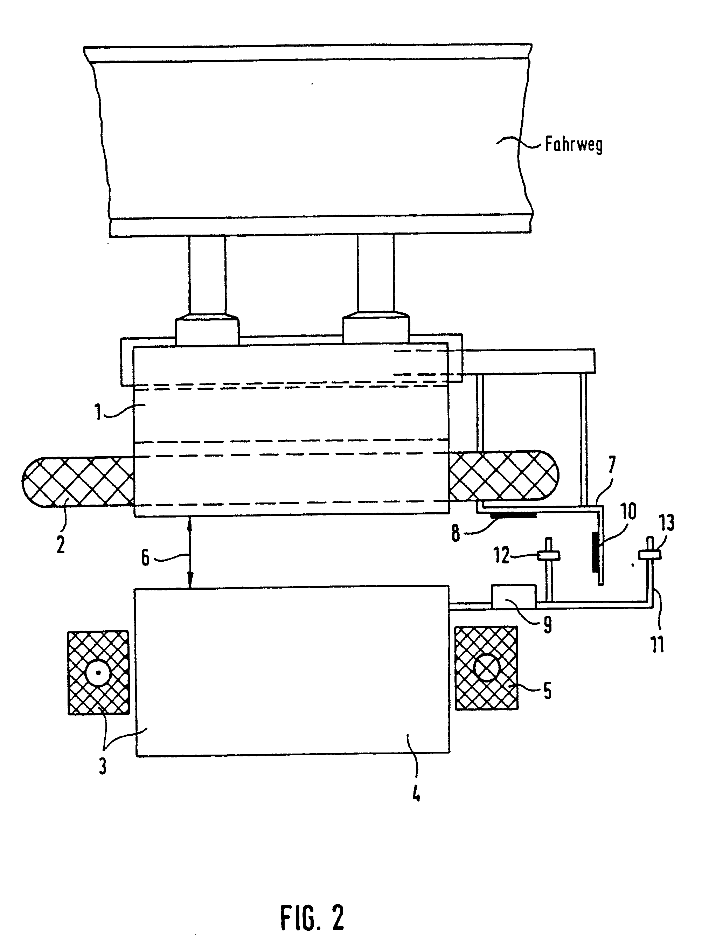

Fig. 2 zeigt ein Ausführungsbeispiel mit der am Statorblechpaket 1 befestigten winkelförmigen Meßleiste 7, bei welcher parallel zur Nutoberfläche des Statorblechpakets und in Fortschreitungsrichtung der Strombelagswelle ein durchgehender Metallbelag 8 aufgebracht ist. Dieser Metallbelag dient als Meßfläche zur Erfassung des Tragspalts 6 mittels des Sensors 9, welcher in definierter Lage zur Poloberfläche des Magnetkerns 4 montiert ist. Die bei Messung des Tragspalts 6 gegen das genutete Statorblechpaket auftretenden Probleme werden damit umgangen. Des weiteren weist das durch den Sensor 9 gegen die Meßfläche 8 gemessene Spaltsignal nahezu keine Störsignale auf, so daß die erste und zweite zeitliche Ableitung des Spaltsignals auch durch Differentiation dieses Spaltsignals gewonnen werden können.

Bei Kurzstatorfahrzeugen kann aus Kostengründen auf die Meßfläche 8 verzichtet und statt dessen gegen die massive Reaktionsschiene gemessen werden.

Weiterhin ist an die winkelförmige Meßleiste 7 eine weitere metallische Meßfläche 10 angebracht, welche in Ausbreitungsrichtung der Strombelagswelle unterbrochen ist, wobei diese Unterbrechungen in fester Zuordnung zur Langstatorwicklung 2 angebracht sind und damit den Informationsträger für die Fahrzeuglage und den daraus gebildeten Untergrößen bildet.

Die auf der Meßfläche 10 digital gespeicherte Information wird mit einem Sensorsystem 11, bestehend aus einer Senderspule 12 und einer Empfängerspule 13, erfaßt. Das Sensorsystem ist mit dem Magnetkern 4 des Erregersystems 3 oder mit dem Fahrzeugrahmen fest verbunden, wobei dessen Lage zum Maximum der Grundschwingung der Erregerwelle fest vorgegeben ist.

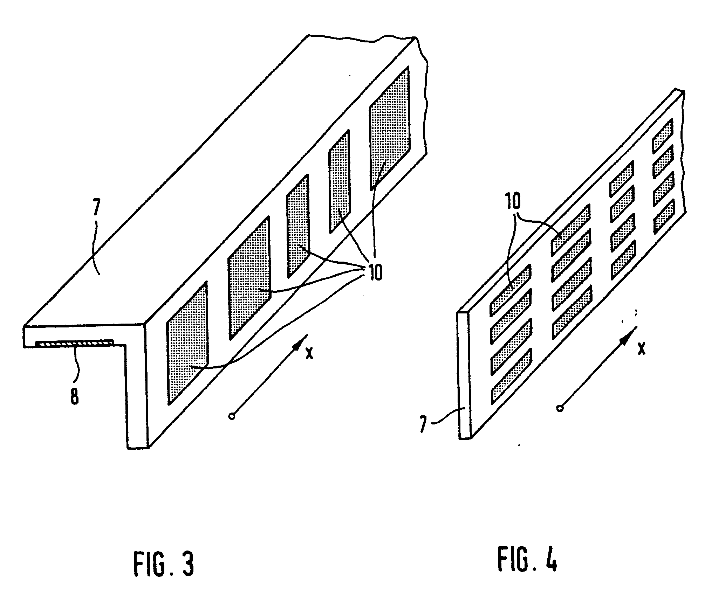

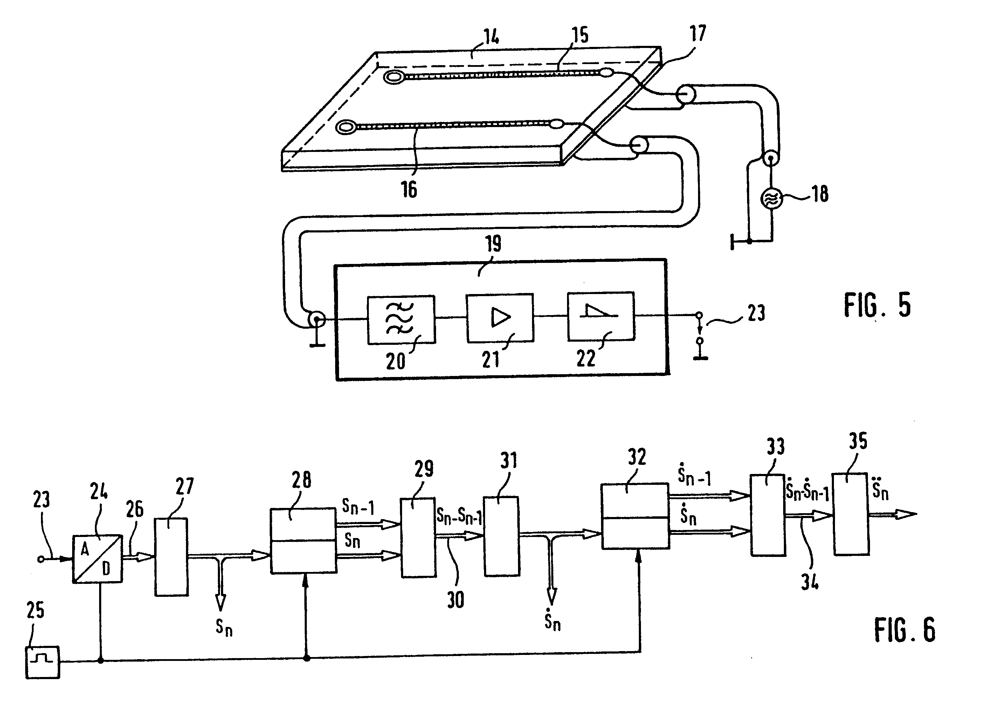

Fig. 3 zeigt ein Ausführungsbeispiel der Meßleiste 7 aus einem elektrisch nichtleitenden Material, auf welches ein in Ausbreitungsrichtung X der Strombelagswelle durchgehendes, elektrisch leitfähiges, Material 8 aufgebracht ist, gegen dessen Oberfläche die Spaltinformation gemessen wird. Eine weitere metallische Beschichtung 10 dient als digitaler Informationsträger der Lageinformation. In Fig. 4 ist ein weiteres Ausführungsbeispiel der Meßleiste 7 dargestellt, bei welcher sowohl die Lageinformation als auch die Spaltinformation in der metallischen Beschichtung 10 in digitaler Form gespeichert sind. Fig. 5 zeigt eine Meßeinrichtung zur Erfassung des Tragspalts. Auf ein isolierendes Trägermaterial 14 ist eine Sendespule 15 und eine Empfangsspule 16 aufgebracht, wobei der Rückleiter dieser Spulen durch die metallisierte Rückseite 17 des Trägermaterials gebildet wird.

Die Sendespule 15 bildet mit der Empfangsspule 16 einen Hochfrequenztransformator, dessen magnetische Kopplung sich in Abhängigkeit des Abstands einer metallischen Platte von der durch die Sende- und Empfangsspulen aufgespannten Ebene ändert. Wird die Sendespule 15 von einem amplituden- und frequenzstabilen Hochfrequenzgenerator 18 gespeist, so ergibt sich am Ausgang der Empfangsspule 16 ein hochfrequentes Signal, dessen Amplitude sich in Abhängigkeit des Abstands einer metallischen Platte von der durch die Sende- und Empfangsspulen aufgespannten Ebene ändert. In einer nachgeschalteten linearen Aufbereitungselektronik 19 wird dieses Signal durch ein auf die Frequenz des Hochfrequenzgenerators 18 abgestimmtes Bandfilter 20 gefiltert, mit einem Verstärker 21 verstärkt und schließlich mittels eines Demodulators 22 demoduliert. Das am Ausgang der Aufbereitungselektronik 19 anstehende Gleichspannungssignal 23 ist eine nichtlineare Funktion des vorgenannten Abstands. Die Linearisierung des Meßsystems sowie die Bildung der ersten und zweiten Ableitung nach der Zeit wird zweckmäßigerweise digital durchgeführt.

Fig. 6 zeigt hierzu ein Ausführungsbeispiel. Das Ausgangssignal 23 der linearen Aufbereitungselektronik 19 wird in einem Digital-Analog-Wandler 24 in ein digitales Datenwort 26 umgewandelt, welches synchron zu dem von einem Taktgenerator 25 erzeugten Taktsignal am Eingang eines Festwertspeichers 27 ansteht. Das vom Digital-Analogwandler 24 gelieferte Datenwort 26 bildet damit die Adresse 26 des Festwertspeichers 27 unter welcher der Wert des linearisierten Tragspalts tabellarisch abgelegt ist. Damit steht am Ausgang des Festwertspeichers zu jedem - durch den Taktgenerator 25 vorgegebenen - Zeitpunkt $t_n$ (n = 1, 2 .... ∞) der Istwert des Tragspalts $s_n$ als digitales Datenwort an.

Zur Bildung der ersten Ableitung des Tragspalts nach der Zeit werden jeweils zwei zeitlich aufeinanderfolgende Tragspalt-Meßwerte $s_n = s(t_n)$ und $s_{n-1} = s(t_{n-1})$ in einem Zwischenspeicher 28 abgespeichert und in einem Subtrahierwerk 29 zum Zeitpunkt $t_n$ voneinander subtrahiert. Das Datenwort $s_n - s_{n-1}$ bildet die Adresse 30 für den nachfolgenden Festwertspeicher 31, in welchem die Werte $E(s_n - s_{n-1}) \cdot (t_n - t_{n-1})$ abgespeichert sind. Wird der Wert der Zeitdifferenz $t_n - t_{n-1}$ durch Wahl der Frequenz des Taktgenerators 25 klein genug gewählt, so steht zum Zeitpunkt $t_n$ am Ausgang des Festwertspeichers 31 der gewünschte Wert der ersten Ableitung $\dot{s}_n$ des Tragspalts $s_n$ nach der Zeit als Digitalwort an.

In derselben Weise wird die zweite Ableitung nach der Zeit des Tragspalts $s_n$ über den Zwischenspeicher 32, das Subtrahierwerk 33 und den Festwertspeicher 35 gebildet.

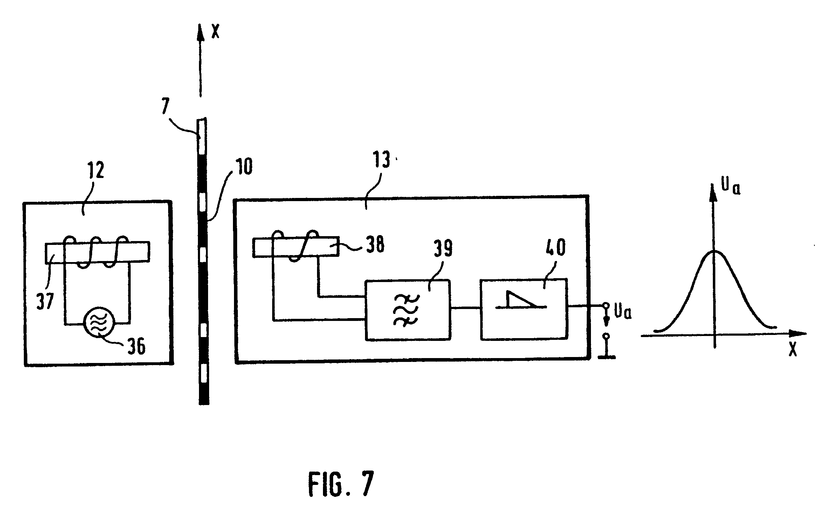

Fig. 7 zeigt ein Ausführungsbeispiel eines auf einem induktiven Meßverfahren beruhenden Sensorsystems, welches auch unter erschwerten Umweltbedingungen in der Lage ist, die zwischen der metallischen Beschichtung 10 vorhandenen Schlitze der Meßleiste 7 sicher zu erkennen. Die Meßleiste 7 ist zwischen dem Sendesystem 12 und dem Empfangssystem 13 eingebracht. Das Sendesystem 12 erzeugt über eine von einem Hochfrequenzgenerator 36 gespeisten Sendespule 37 ein magnetisches Hochfrequenzfeld, welches von der Empfangseinrichtung 13, bestehend aus einer Empfangsspule 38 mit nachgeschaltetem, auf die Sendefrequenz abgestimmten Bandfilter 39 und einem Demodulator 40 erfaßt wird. Befindet sich senkrecht zur Verbindungsachse der Sende- und Empfangsspule eine metallische Platte, so wird das Magnetfeld der Sendespule 37 von der Empfangsspule 38 abgeschirmt, wodurch die Ausgangsspannung $U_a$ der Empfangseinrichtung einen sehr kleinen Wert annimmt. Befindet sich jedoch senkrecht zur Verbindungsachse der Sende- und Empfangsspule ein von zwei Metallplatten berandeter nichtleitender Zwischenraum, so wird die Ausgangsspannung $U_a$ der Empfangseinrichtung 13 maximal. Dieses Maximum gibt somit die Mitte eines von zwei Metallplatten berandeten Zwischenraums mit hinreichender Genauigkeit wieder. Zur Erhöhung dieser Genauigkeit kann es zweckmäßig sein, mehrere Sendesysteme und/oder Empfangssysteme zur Gewinnung des vorgenannten Maximums einzusetzen.

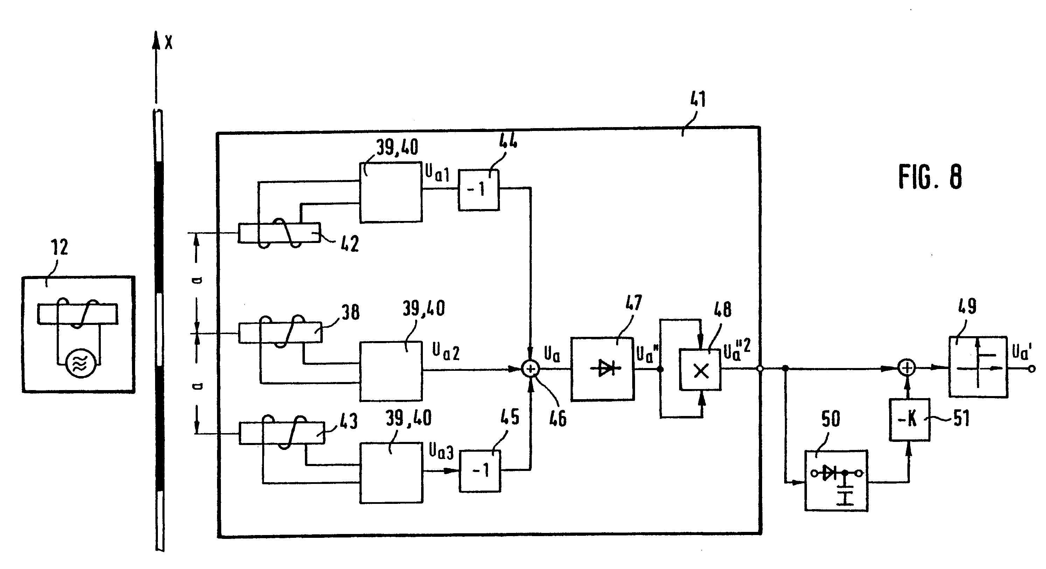

Fig. 8 zeigt ein Ausführungsbeispiel mit einem Sendesystem 12 und einem erweiterten Empfangssystem 41, bei welchem die Empfangsspule 38 mit nachgeschaltetem Bandfilter 39 und Demodulator 40 durch zwei weitere, um den Abstand a versetzten Empfangsspulen 42 und 43 mit nachgeschalteten Bandfiltern 39 und Demodulatoren 40 ergänzt wurde. Das Ausgangssignal der Empfangsspule 38 wird mit den negativ bewerteten Ausgangssignalen 44, 45 der Empfangsspulen 42 und 43 einer Summationsstelle 46 mit nachfolgender Gleichrichtung 47 und Quadrierung 48 zugeführt. Das Ausgangssignal des Quadrierbausteins 48 weist die gewünschte schärfere Ausbildung des Maximums auf. Zur Gewinnung eines Digitalsignals aus der Ausgangsspannung des Quadrierbausteins 48 ist es weiterhin zweckmäßig, diese Spannung einem Komparator 49 zuzuführen, wobei dessen Referenzwert aus dem zeitlich vorhergehenden Maximum gebildet wird.

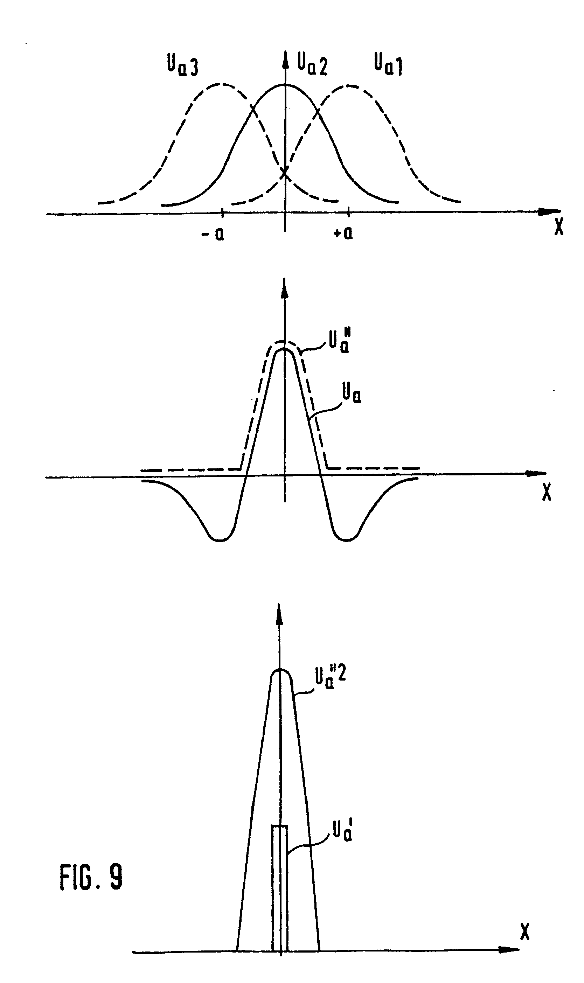

Dazu wird dieses Maximum mit einem Spitzenwertmesser 50 erfaßt und mit einem konstanten Faktor 51 (K<1) bewertet. Damit ist sichergestellt, daß die Impulsbreite des Digitalsignals selbst bei veränderlicher Amplitude des Maximums stets unverändert bleibt. Zur Verdeutlichung der vorstehend gemachten Ausführungen zeigt Fig. 9 die charakteristischen Signale der Einrichtung nach Fig. 8. Selbstverständlich kann auch ein Sensorsystem, welches nur aus Sendespulen besteht und deren Dämpfung durch die Metallplatten gemessen wird, eingesetzt werden.

Mit den Sensorsystemen nach Fig. 7 oder Fig. 8 kann die auf der Meßleiste in Form der Abfolge von Metallschicht-Zwischenraum-Metallschicht gespeicherte Digitalinformation zuverlässig erfaßt werden. Zur Erhöhung der Auflösung der Lageinformation können darüber hinaus mehrere Sensoren in Ausbreitungsrichtung der Strombelagswelle örtlich derart versetzt werden, daß diese einen Nonius bilden. Zur Vermeidung von Fehlern, welche sich aus Längsverschiebungen der Fahrzeugsektionen ergeben können, ist es zweckmäßig, mehrere Sensorgruppen symmetrisch zur Mittellinie des Fahrzeugs anzuordnen.

Mit den vorgenannten Maßnahmen kann die gesamte für ein Langstator-Magnetschwebefahrzeug benötigte Lageinformation in die Meßleiste eingeschrieben und auf dem Fahrzeug erfaßt werden. Die Übertragung dieser Lageinformation zum Unterwerk erfolgt dann beispielsweise über Funk, wobei auf den üblicherweise bereits vorhandenen Schlitzhohlleiter als Übertragungskanal zurückgegriffen werden kann. Allerdings liegt die von den Sensoren erfaßte Lageinformation nur in Form von Digitalimpulsen vor, die entweder im Unterwerk oder aber im Fahrzeug selbst geeignet umgeformt werden muß.

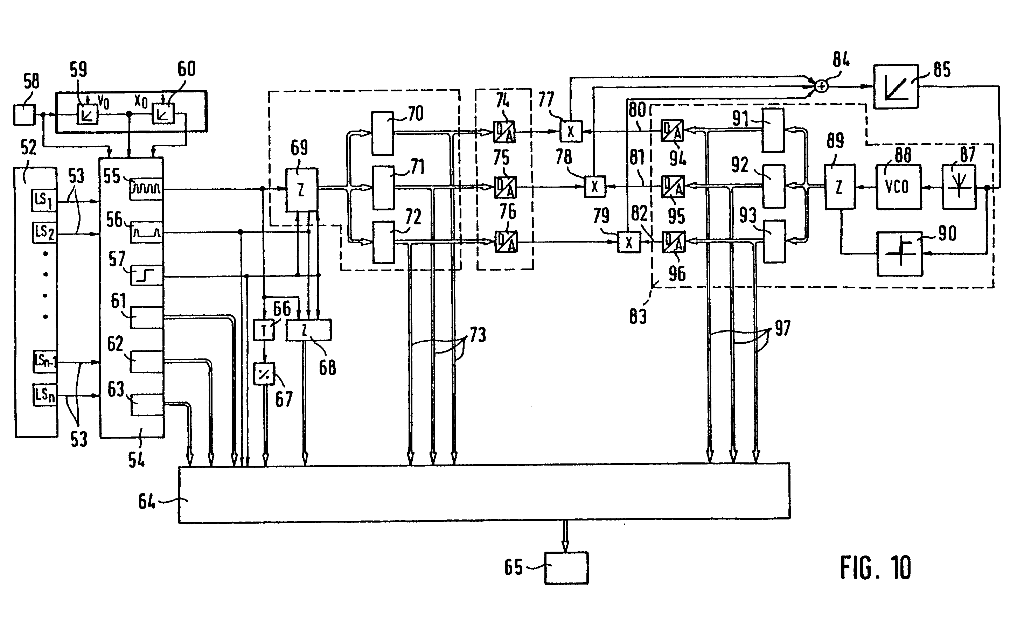

Fig. 10 zeigt ein Ausführungsbeispiel für die Bildung der aus der Fahrzeuglageinformation abgeleiteten Größen auf dem Fahrzeug selbst und deren Übertragung zum Unterwerk. Die Ausgangssignale 53 der einzelnen oder in Gruppen zusammengefaßten und längs des Fahrzeugs verteilten Sensoren 52, werden in einer Auswerteelektronik 54 aufbereitet. Hierzu werden die Ausgangssignale in der Impulsaufbereitungsstufe 55 in eine äquidistante Impulsfolge umgewandelt. Eine Relativlageelektronik 56 gibt auf die Phase R der Langstatorwicklung bezogene sogenannte Nullimpulse ab und eine Fahrtrichtungselektronik 57 erkennt aus der zeitlichen Abfolge der Ausgangssignale 53 von mindestens zwei benachbarten Sensoren die Fahrtrichtung des Fahrzeugs. Zur Steigerung der Auflösung der Lageinformation können die Ausgangssignale der Elektronik-Baugruppen 55, 56 und 57 noch durch die Messung der Fahrzeugbeschleunigung durch einen Beschleunigungsmesser 58 und der daraus durch einen Integrator 59 gebildeten Fahrzeuggeschwindigkeit sowie der durch einen weiteren Integrator 60 gebildeten Wegstrecke gestützt werden.

Mustererkennungslogiken für den Ort eines Schaltabschnitts 61, für den Ort und die Stellung von Weichen 62 und für die Phasenfolge der Langstatorwicklung 63 erkennen die in der Meßleiste eingeschriebene und von den Sensoren 52 erfaßte Information und geben sie über einen drahtlosen Informationskanal 64 an den unterwerkseitigen Empfänger 65 weiter.

Ebenso wird das digitale Ausgangssignal der Fahrtrichtungselektronik 57 und die von der Relativlageelektronik 56 abgegebenen Nullimpulse (welche die Lage der Phase R der Langstatorwicklung relativ zum Erregersystem angeben) direkt über den Informationskanal 64 an den unterwerksseitigen Empfänger 65 weitergeleitet. Zur Bildung der momentanen Fahrzeuggeschwindigkeit wird die Zeitspanne zwischen jeweils zwei aufeinanderfolgenden - von der Impulsaufbereitungsstufe 55 gelieferten - Impulsen mittels einer Zeitmeßeinrichtung 66 gemessen. Die in einem nachgeschalteten Dividierer 67 durchgeführte Division führt bei bekannter Teilung der Meßleiste auf die gewünschte momentane Fahrzeuggeschwindigkeit.

Die Aufbereitung der Weginformation erfolgt in einem Impulszähler 68, welcher abhängig vom Ausgangssignal der Fahrtrichtungselektronik 57 vorwärts oder rückwärts zählt. Die absolute Weginformation steht als Vielfaches der Polteilung der Langstatorwicklung (über die Zählung der Ausgangsimpulse der Relativlageelektronik 56) mit der aus den Ausgangsimpulsen der Impulsaufbereitungselektronik 55 gewonnenen Feinunterteilung als Digitalinformation zur Verfügung.

Mit den vorstehenden Ausführungen ist gezeigt, daß die Fahrzeuglage und die daraus abzuleitenden Größen auf dem Fahrzeug selbst ermittelt und über den drahtlosen Übertragungskanal 64 zum unterwerksseitigen Empfänger 65 übertragen werden können. Häufig ist es jedoch zweckmäßig, die Information

- Fahrtrichtung
- Relativlage der Phase R
- Fahrzeuggeschwindigkeit
- absolute Wegstrecke

nicht direkt, sondern implizit als trigonometrische Funktionen am Ausgang des unterwerksseitigen Empfängers 65 bereitzustellen. Hierzu genügt ein Zweiphasensystem, aus Redundanzgründen ist jedoch ein symmetrisches Dreiphasensystem vorzuziehen. Zur Erzeugung dieses symmetrischen Dreiphasensystems werden die Ausgangsimpulse der Impulsaufbereitungsstufe 55 von einem Zähler 69 gezählt, wobei dieser von den Ausgangsimpulsen der Relativlageelektronik 56 jeweils auf den Zählerstand Null gesetzt wird und abhängig vom Ausgangssignal der Fahrtrichtungselektronik 57 vorwärts oder rückwärts zählt. In den nachgeschalteten Festwertspeichern 70, 71 und 72 sind die um je $2\pi/3$ phasenversetzten Sinusfunktionen tabellarisch abgelegt, so daß an deren Ausgang das gewünschte dreiphasige Drehstromsystem 73 in digitaler Form ansteht. Hierbei wird eine Periode vom Beginn eines Nullimpulses bis zum jeweils nächsten Nullimpuls der Relativlageelektronik durchlaufen.

Da hochfrequente Störungen unter den erschwerten Umweltbedingungen eines Magnetschwebefahrzeugs nicht auszuschließen sind, ist es zweckmäßig, das analoge Äquivalent des symmetrischen Drehstromsystems 73 mit einem Tiefpaß zu filtern. Passive Tiefpässe eignen sich infolge der frequenzabhängigen Phasenverschiebung in diesem Anwendungsfall nicht.

Über eine Regelschaltung kann jedoch das gewünschte Tiefpaßverhalten erzielt werden, wobei ein neues symmetrisches und tiefpaßgefiltertes Dreiphasensystem entsteht, das gegenüber dem Original-Drehstromsystem 73 eine konstante frequenzunabhängige Phase von $\pi/2$ aufweist.

Hierzu werden die digitalen Ausgangsgrößen des Original-Drehstromsystems 73 über die Digital-Analogwandler 74, 75 und 76 in ein analoges System umgewandelt. Die an den Ausgängen der Digital-Analogwandler 74, 75 und 76 anstehende symmetrische Dreiphasenspannung wird mittels dreier Multiplizierer 77, 78 und 79 mit den Ausgangsspannungen 80, 81 und 82 eines spannungsgesteuerten dreiphasigen Oszillators 83 multipliziert. Die Produkte der Multiplizierer-Ausgangsspannungen werden in einem Summationsglied 84 aufsummiert und einem Integrator 85 zugeführt. Dessen Ausgangsspannung verstellt den spannungsgesteuerten Oszillator 83 derart in Frequenz und Phasenlage, daß im eingeschwungenen Zustand dessen Ausgangsspannungen 80, 81 und 82 dieselbe Frequenz sowie eine konstante, frequenzunabhängige Phasenverschiebung von $\pi/2$ gegenüber jenen des Original-Drehstromsystems (an den Ausgängen der Digital-Analogwandler 74, 75 und 76) aufweisen.

Der dreiphasige spannungsgesteuerte Oszillator 83, dessen Ausgangsspannungen 80, 81 und 82 sich in der Frequenz abhängig von der Eingangsspannung 86 verstellen lassen, ist wie folgt aufgebaut:

Einem Betragsbildner 87 ist ein spannungsgesteuerter Oszillator 88 nachgeschaltet, dessen Ausgangsfrequenz linear von seiner Eingangsspannung abhängt. Die Ausgangsimpulsfolge des spannungsgesteuerten Oszillators 88 wird von einem Ringzähler 89 gezählt, wobei die Zählrichtung von der Polarität der Eingangsspannung über den Komparator 90 bestimmt ist. Der Zählerstand des Ringzählers 89 dient als Eingangsgröße der Festwertspeicher 91, 92 und 93, in welchen die um je $2\pi/3$ phasenversetzten Sinusfunktionen tabellarisch abgelegt sind. Im Ausgang dieser Festwertspeicher liegt damit das gewünschte symmetrische Drehstromsystem in digitaler Kodierung vor, welches mit den nachgeschalteten Digital-Analogwandlern 94, 95 und 96 in Analoggrößen umgewandelt wird.

An den Ausgängen der Festwertspeicher 91, 92 und 93 steht nunmehr das tiefpaßgefilterte, in ein symmetrisches Dreiphasensystem 97 verschlüsselte Fahrzeuglagesignal an, das gegenüber dem Original-Drehstromsystem 73 eine konstante frequenzunabhängige Phasenverschiebung von $\pi/2$ aufweist. Die Bandbreite dieses Tiefpasses mit frequenzunabhäniger Phasenverschiebung wird durch die Integrationszeitkonstante des Integrators 85 festgelegt.

Die vorstehenden Ausführungen zeigen, daß das Fahrzeuglagesignal und die hieraus abgeleiteten Größen mit einfachen elektronischen Mitteln zuverlässig und störsicher selbst unter rauhen Umweltbedingungen erfaßt werden kann.

7

Im folgenden wird eine Ausführung beschrieben, bei der die Meßleiste zusätzlich noch eine Schlitzkodierung für die Bestimmung der absoluten Fahrzeuglage längs des Fahrweges besitzt. Zu dieser Ausführung gehört auch ein abgewandeltes Sensorsystem.

In Figur 11 ist wiederum das Statorblechpaket 101 des Langstatormotors mit der in fester Lagezuordnung und parallel dazu angeordneten Meßleiste 107 dargestellt. Die Meßleiste 107 besitzt als Pollagedekodierung in regelmäßigen Abständen angeordneten Ausnehmungen 120, zwischen denen Zungen 121 verbleiben. Die Länge der Ausnehmungen 120 bzw. der Zungen 121 in Längsrichtung (x-Richtung) entspricht jeweils einer Polteilung $\tau_p$ . Dementsprechend ist die Pollagekodierung den Phasen der mehrsträngigen Statorwicklung zugeordnet.

Am Fahrzeug befindet sich in räumlich fester Zuordnung zum Tragmagneten 103 ein Sensorsystem 113, dessen Länge in x-Richtung wenigstens der doppelten Polteilung $\tau_p$ entspricht. Der räumliche Abstand des Sensorsystems 113 zum Tragmagneten 103 ist frei wählbar, weil die vom Sensorsystem 113 abgegebenen Meßsignale periodische Meßsignale sind, die insbesondere einer Sinus/Kosinus-Funktion folgen, womit eine räumliche Winkelverschiebung dieser Signale möglich ist.

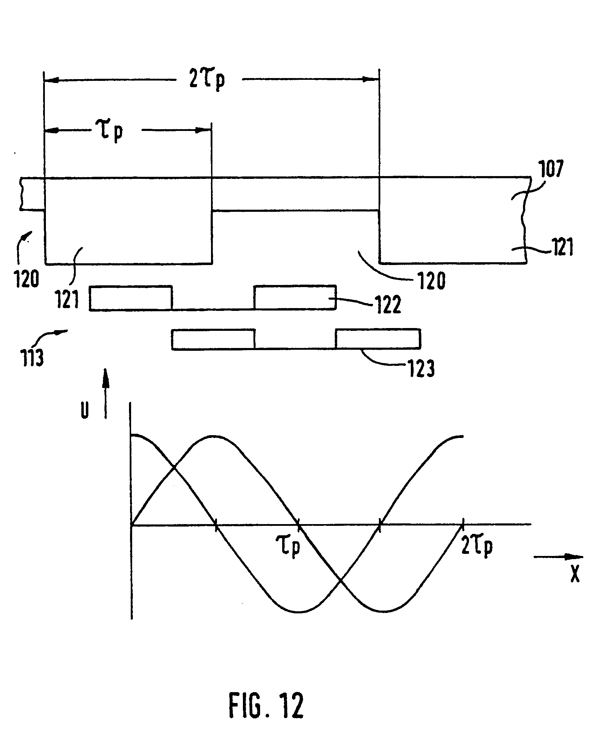

Aus Figur 12 entnimmt man, daß das Sensorsystem, welches insgesamt eine Länge besitzt, die der doppelten Polteilung entspricht, aus zwei Sensoren 122, 123 besteht, die in x-Richtung relativ zueinander um eine halbe Polteilung versetzt angeordnet sind. Relativ zur Meßleiste 107 besitzen die beiden Sensoren 122, 123 unterschiedlichen Abstand.

Die Sensoren 122, 123 sind so ausgebildet, daß sie im Zuge der Pollagedekodierung aus dem rechteckigen Verlauf der Pollagekodierung (Ausnehmungen 120, Zungen 121) Meßsignale abgeben, die im wesentlichen nur den Grundwellenanteil enthalten. Entsprechende Meßsignale sind im Diagramm im unteren Teil der Figur 12 wiedergegeben. Die Meßsignale der beiden Sensoren 122, 123 sind um eine halbe Polteilung versetzt. Abstandsschwankungen des Sensorsystems 113 gegenüber der Meßleiste 107 äußern sich nur in der Amplitude der Meßsignale, nicht aber in deren Phasenlage. Durch Differenzbildung der Meßsignale lassen sich daher Abstandseinflüsse auf einfache Weise eliminieren.

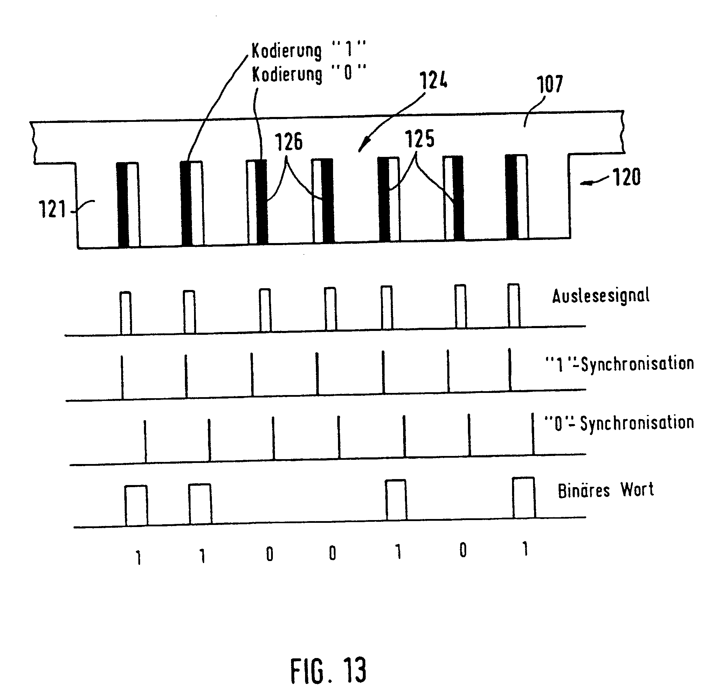

Die in den Figuren 11 und 12 dargestellte Meßleiste 107 besitzt darüber hinaus eine Schlitzkodierung 124, die in Figur 13 dargestellt ist. Dazu weist jede Zunge 121 eine Reihe von Schlitzen 125 auf, die bezüglich eines konstanten Abstandsrasters 126 rechtsbündig oder linksbündig angeordnet sind. Das Abstandsraster 126 ist jeweils durch die Trennung zwischen dunklen und hellen Bereichen der Schlitze 125 definiert. Im unteren Teil der Figur 13 sind darüber hinaus die jeweiligen Auslesesignale mit dazugeordneten Synchronisationssignalen dargestellt. Aus der Kombination von Auslesesignalen und entsprechenden Synchronisationen werden binäre Worte gebildet, die den jeweiligen Ort des Fahrzeuges längs des Fahrweges definieren.

Im Hinblick auf eine geringe Rückwirkung der Schlitzkodierung 124 auf die Pollagedekodierung ist dabei die Anzahl der angeordneten Schlitze 125 auf jeder Zunge 121 konstant. Die Wertigkeit eines jeden Schlitzes 125 ist durch seine räumliche Lage (rechtsbündig - linksbündig) innerhalb eines jedem Schlitz zugewiesenen Bereiches gekennzeichnet. Die Zuordnung jeder gelesenen Schlitzinformation erfolgt durch das Pollagesignal, da sich dessen zeitlicher Verlauf an der Pollagekodierung orientiert. Abhängig von dem Auflösungsvermögen der zu lesenden Schlitzinformation, der Länge der Pollagekodierung und der Länge der zu lesenden Information können eine oder mehrere Pollagekodierungen zur Beschreibung eines binären Wortes verwendet werden.

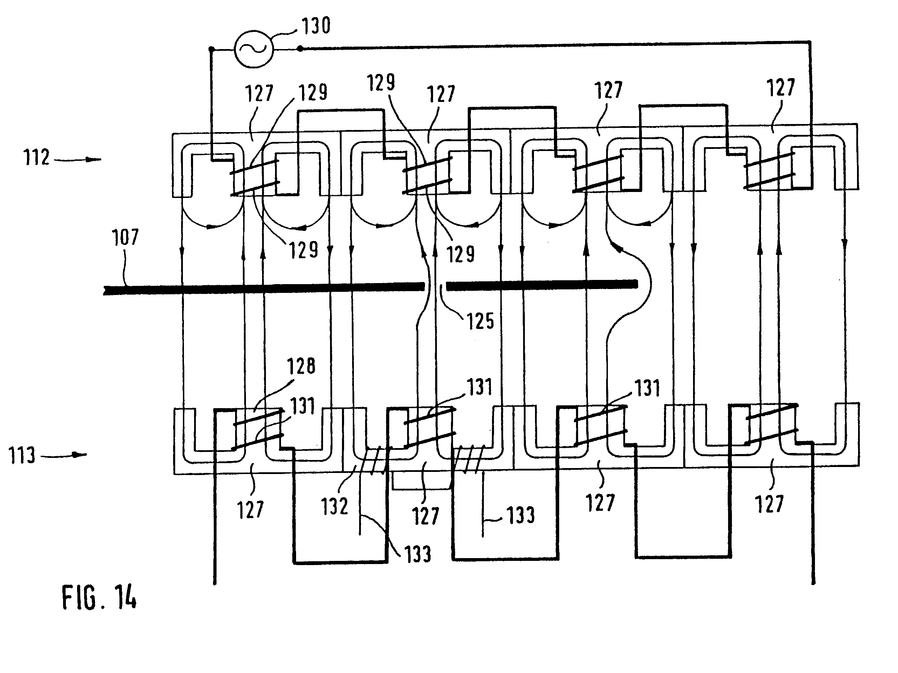

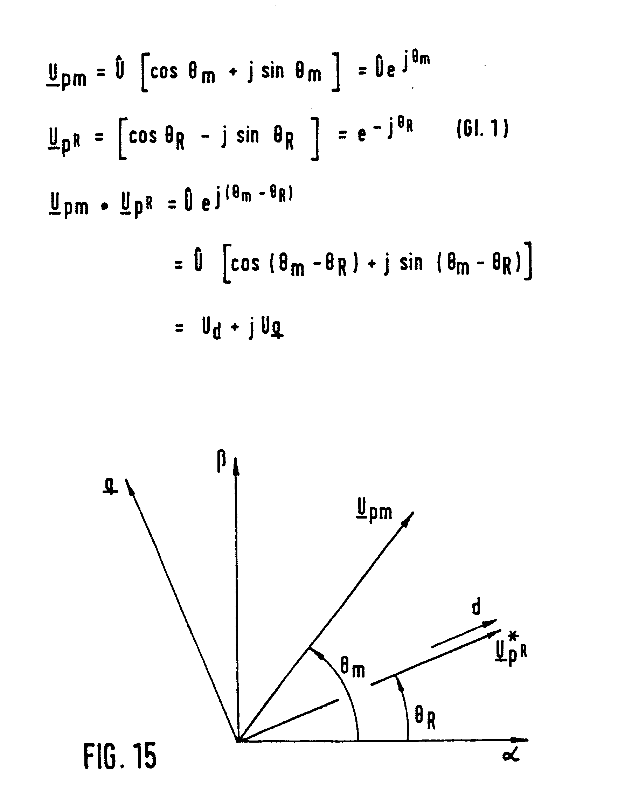

Figur 14 zeigt in schematischer Darstellung den Aufbau eines Sensors 122 oder 123 des Sensorsystems 112, 113. Jeder Sensor 122 bzw. 123 besteht aus einer Reihe von U- oder E-förmigen Kernen 127. Beidseits der Meßleiste 107 ist jeweils eine Reihe von Kernen 127 angeordnet.

Die in Figur 14 obere Reihe der Kerne 127 dient zum Aufbau eines in der Figur 14 angedeuteten Magnetfeldes. Dazu trägt jeder zweite Schenkel 128 der Kernreihe eine Wicklung 129. Die Wicklungen 129 sind untereinander in Reihe geschaltet und mit einem Generator 130 verbunden.

Die in Figur 14 untere Reihe der Kerne 127 trägt wiederum an jedem zweiten Schenkel 128 eine Meßwicklung 131. Diese Meßwicklungen 131 sind untereinander in Reihe geschaltet, sie dienen zur Pollagedekodierung.

Wenigstens zwei benachbarte Stege 132 der in Figur 14 unteren Kernreihe tragen ebenfalls in Reihe geschaltete Wicklungen 133, die als Meßwicklung für die Schlitzdekodierung dienen.

Das von den Erregerwicklungen 129 auf der einen Seite der Meßleiste 107 erzeugte magnetische Wechselfeld wird auf der anderen Seite der Meßleiste 107 von den Wicklungen 131 für die Pollagedekodierung und 133 für die Schlitzdekodierung erfaßt. Die gewünschten Informationen werden durch Modulation der magnetischen Flußverteilung, die in Figur 14 angedeutet ist, ermittelt. Dabei werden die in der elektrisch leitfähigen Pollagekodierung der Meßleiste 107 auftretenden Wirbelstromeffekte ausgenutzt. Während die Pollageinformation integral über den Bereich von etwa einer Polteilung bestimmt wird, erfolgt die Schlitzdekodierung in einem engbegrenzten Bereich durch die zusätzliche Wicklung 133, welche die beim Passieren eines Schlitzes 125 auftretenden Feldunsymmetrien erfaßt und ausnutzt.

Um den Einfluß der Schlitzdekodierung auf die Pollagedekodierung gering zu halten, ist die Anzahl der Schlitze 125 auf jeder Zunge 121 konstant und sind die Schlitze 125 im wesentlichen an den gleichen Orten der Zungen 121 angeordnet, nämlich jeweils rechtsbündig oder linksbündig zu den Grenzen des Abstandsrasters.

Die Auswertung der Meßsignale für die Schlitzdekodierung erfolgt unter Verwendung der Figur 13 dargestellten Auslesesignale und Synchronisationssignale in bekannter Weise.

Die Auswertung der Meßsignale für die Pollagedekodierung erfolgt zweckmäßig dadurch, daß zunächst ein Pollagevektor gebildet wird, dessen Definition sich aus den Formeln und der grafischen Darstellung in Figur 15 ergibt. Die verwendeten Symbole sind wie folgt definiert:

$\underline{U}\ U_{pm}$ Pollagemeßvektor

$\underline{U}_{pR}$ Referenzvektor

$\overline{\Theta}_m$ Pollagewinkel (Messung)

$\Theta_R$ Pollagewinkel (Referenz)

$\Delta\Theta$ Phasenabweichung

$V_R$ Fahrzeuggeschwindigkeitssignal

$T_s$ Integrationszeitkonstante Fahrzeug

Zur Elimination der Amplitudenabhängigkeit und zur Dämpfung vorhandener Oberschwingungen im Pollagesignal des Sensorsystems 113 wird der gemessene Pollagevektor multiplikativ entsprechend der Gleichung 1 in

Figur 15 mit einem Referenzvektor $\underline{U}_{pR}$ verknüpft. Diese Beziehung entspricht einer Koordinatentransformation des Pollagemeßvektors $\underline{U}_{pm}$ auf ein Referenzkoordinatensystem. Durch Nachführen des Referenzvektors $\underline{U}_{pR}$ wird der stationäre Winkelfehler unabhängig von der Frequenz des Pollagesignales zu Null geregelt.

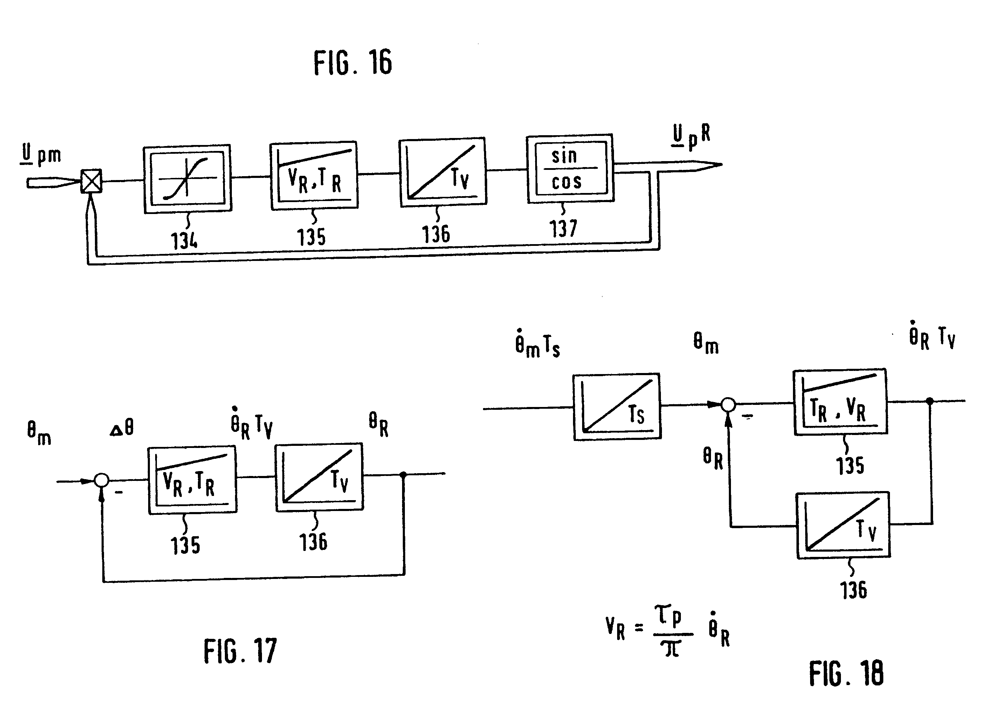

Der der Winkeldifferenz $\Theta_m \cdot \Theta_R$ entsprechende Imaginärteil wird einem Phasenregelkreis zugeführt, der in Figur 16 dargestellt ist. Dieser Phasenregelkreis besitzt zunächst eine Schaltung 134 zum Ausgleich von Nichtlinearitäten. An die Schaltung 134 schließt sich ein Regler 135 an, der ein analoges Ausgangssignal liefert, welches der Fahrzeuggeschwindigkeit proportional ist. Der Regler 135 steuert einen spannungsgesteuerten Oszillator 136, an dessen Ausgang ein Sinus-Kosinus-Konverter 137 liegt, welcher den Referenzvektor $\underline{U}_{pR}$ liefert. Der Referenzvektor $\underline{U}_{pR}$ wird wie dargestellt zurückgeführt.

Figur 17 zeigt einen vereinfachten, linearisierten Phasenregelkreis mit Regler 135 und spannungsgesteuertem Oszillator 136. Figur 17 zeigt, daß am Ausgang des Reglers 135 ein der Fahrzeuggeschwindigkeit proportionales Signal abgegriffen werden kann. Da in diesem Fall auch für die Fahrzeuggeschwindigkeit ein analoges Signal zur Verfügung steht, ergibt sich gegenüber einer zeitdiskreten Geschwindigkeitsermittlung ein besseres von der Fahrgeschwindigkeit unabhängiges dynamisches Verhalten des Fahrzeugs. Die Filterwirkung im einzelnen kann durch die Wahl der Reglerparameter eingestellt werden.

Ganz allgemein gilt, daß die Pollagesignale im geschlossenen Phasenregelkreis frequenzunabhängig gefiltert werden, so daß immer nur die Grundwelle der Pollagesignale zur Erfassung der jeweiligen Fahrzeuglage des Magnetschwebefahrzeugs herangezogen wird. Weil lediglich analoge Signale verarbeitet werden, ist eine hohe Auflösung der Pollageinformation möglich.

Zur eindeutigen Bestimmung der absoluten Fahrzeuglage ist die inkrementale Schlitzkodierung überlagert. Hierdurch ist gewährleistet, daß zur Bestimmung der absoluten Fahrzeuglage nicht auf Speicherinhalte zurückgegriffen werden muß, sondern die gesuchte Information eindeutig aus dem aktuell gelesenen Datensatz bestimmbar ist.

Beide Maßnahmen entsprechen der Zielsetzung nach einer hohen Verfügbarkeit der Lagesignale dadurch, daß nach Beseitigung etwaiger Störungen eine Neufestlegung des am Fahrweg orientierten Bezugssystems nicht notwendig ist. Darüber hinaus ergibt sich eine Entschärfung von Problemstellen, wie sie zum Beispiel durch die notwendigen Dehnspalte (des Fahrwegs) gebildet werden, da die Pollagedekodierung einen integral messenden Charakter hat und die Dehnspalte selbst in einem Bereich der Meßleiste angeordnet werden, in dem keine inkrementalen Schlitzinformationen eingeschrieben sind.

BEZUGSZEICHENLISTE

| | | | | |
|---|---|---|---|---|
| 1 | Statorblechpaket | | 31 | Festwertspeicher |
| 2 | Drehstromwicklung | | 32 | Zwischenspeicher |
| 3 | Tragmagnet | | 33 | Subtrahierwerk |
| 4 | Magnetkern | | 34 | |
| 5 | Erregerwicklung | | 35 | Festwertspeicher |
| 6 | Schwebeabstand | | 36 | Hochfrequenzgenerator |
| 7 | Meßleiste | | 37 | Sendespule |
| 8 | Metallbelag | | 38 | Empfangsspule |
| 9 | Sensor | | 39 | Bandfilter |
| 10 | Meßfläche | | 40 | Demodulator |
| 11 | Sensorsystem | | 41 | Empfangssystem |
| 12 | Sendespule | | 42 | Empfangsspule |
| 13 | Empfängerspule | | 43 | Empfangsspule |
| 14 | Trägermaterial | | 44 | Ausgangssignal |
| 15 | Sendespule | | 45 | Ausgangssignal |
| 16 | Empfangsspule | | 46 | Summationsstelle |
| 17 | Rückseite | | 47 | Gleichrichter |
| 18 | Hochfrequenzgenerator | | 48 | Quadrierbaustein |
| 19 | Aufbereitungselektronik | | 49 | Komparator |
| 20 | Bandfilter | | 50 | Spitzenwertmesser |
| 21 | Verstärker | | 51 | Faktor |
| 22 | Demodulator | | 52 | Sensoren |
| 23 | Gleichspannungssignal | | 53 | Ausgangssignale |
| 24 | Analogwandler | | 54 | Auswerteelektronik |
| 25 | Taktgenerator | | 55 | Impulsaufbereitungsstufe |
| 26 | Datenwort | | 56 | Relativlage Elektronik |
| 27 | Festspeicher | | 57 | Fahrtrichtungselektronik |
| 28 | Zwischenspeicher | | 58 | Beschleunigungsmesser |
| 29 | Subtrahierwerk | | 59 | Integrator |
| 30 | Adresse | | 60 | Integrator |

| 61 | Schaltabstand | 101 | Statorblechpaket |
|---|---|---|---|
| 62 | Weiche | 103 | Tragmagnet |
| 63 | Langstatorwicklung | 107 | Meßleiste |
| 64 | Informationskanal | 112 | Senderspule |
| 65 | Empfänger | 113 | Senderspule, Sensorsystem |
| 66 | Zeitmeßeinrichtung | 120 | Ausnehmungen |
| 67 | Dividierer | 121 | Zungen |
| 68 | Impulszähler | 122 | Sensor |
| 69 | Zähler | 123 | Sensor |
| 70 | Festwertspeicher | 124 | Schlitzkodierung |
| 71 | Festwertspeicher | 125 | Schlitz |
| 72 | Festwertspeicher | 126 | Abstandsraster |
| 73 | Drehstromsystem | 127 | Kerne |
| 74 | Digitalanalogwandler | 128 | Schenkel |
| 75 | Digitalanalogwandler | 129 | Wicklung (Erregung) |
| 76 | Digitalanalogwandler | 130 | Generator |
| 77 | Multiplizierer | 131 | Wicklung (Pollagedekodierung) |
| 78 | Multiplizierer | 132 | Stege |
| 79 | Multiplizierer | 133 | Wicklung (Schlitzdekodierung) |
| 80 | Ausgangsspannung | 134 | Schaltung |
| 81 | Ausgangsspannung | 135 | Regler |
| 82 | Ausgangsspannung | 136 | Oszillator |
| 83 | Oszillator | 137 | Konverter |
| 84 | Summationsglied | | |
| 85 | Integrator | | |
| 86 | Eingangsspannung | | |
| 87 | Betragsbildner | | |
| 88 | Oszillator | | |
| 89 | Ringzähler | | |
| 90 | Komparator | | |
| 91 | Festwertspeicher | | |
| 92 | Festwertspeicher | | |
| 93 | Festwertspeicher | | |

**Ansprüche**

1. Vorrichtung zur inkrementalen Erfassung der Fahrzeuglage eines Magnetschwebefahrzeugs, insbesondere mit Langstatormotor, mit wenigstens einer eine Pollagekodierung (120,121) aufweisenden Meßleiste (7,107), die sich in Fahrtrichtung mit fester Lagezuordnung zur Statorwicklung (1,101) erstreckt,und mit einem am Fahrzeug angeordneten Sensorsystem aus einem oder mehreren, in Fahrtrichtung mit Abstand angeordneten Sensoren (13,113) zum Erfassen der Pollagekodierung, dadurch gekennzeichnet, daß die Meßleiste (7,107) neben der Pollagekodierung (120,121) auch eine Fahrzeugabsolutagekodierung (124) in Form einer in Längsrichtung des Fahrwegs beabstandeten Schlitzkodierung (124) aufweist und ein weiteres Sensorsystem zum Erfassen der Fahrzeugabsolutagekodierung vorgesehen ist und daß die Sensoren (13,113, 122,123) unabhängig von den Feldern des Antriebssystems angeordnet sind und einerseits Meßwicklungen (131) für die Pollagedekodierung und andererseits Meßwicklungen (133) für die Schlitzdekodierung besitzen, wobei die Meßwicklungen (131) für die Pollagedekodierung unter einem anderen Winkel zur Meßleiste (107) angeordnet sind als die Meßwicklungen (133) für die Schlitzdekodierung.

2. Vorrichtung nach Anspruch 1,dadurch gekennzeichnet, daß die Sensoren (122,123) aus U- oder E-förmigen Kernen (127) aufgebaut sind, deren Schenkel (128) auf die Meßleiste (107) gerichtet sind,und daß die Meßwicklungen (131) für die Pollagedekodierung an den Schenkeln (128) sowie die Meßwicklungen (133) für die Schlitzdekodierung an den Stegen (132) angeordnet sind.

3. Vorrichtung nach Anspruch 1 oder 2, dadurch gekennzeichnet, daß wenigstens zwei benachbarte Stege (132) eine Meßwicklung (133) für die Schlitzdekodierung tragen.

4. Vorrichtung nach einem der Ansprüche 1 bis 3, dadurch gekennzeichnet, daß die Pollagekodierung aus im Abstand der Polteilung der Statorwicklung (1,101) angeordneten rechteckigen Ausnehmungen (120) der Meßleiste (107) besteht.

5. Vorrichtung nach einem der Ansprüche 1 bis 4, dadurch gekennzeichnet, daß die Schlitzkodierung (124) aus breiten Schlitzen (125) besteht, die an den zwischen den Ausnehmungen (120) verbliebenen Zungen (121) angeordnet sind.

6. Vorrichtung nach einem der Ansprüche 1 bis 5, dadurch gekennzeichnet, daß die Anzahl der Schlitze (125) auf jeder Zunge (121) konstant ist.

7. Vorrichtung nach einem der Ansprüche 1 bis 6, dadurch gekennzeichnet, daß die Schlitze (125) relativ zu einem konstanten Abstandsraster (126) rechtsbündig oder linksbündig angeordnet sind.

8. Vorrichtung nach einem der Ansprüche 1 bis 7, gekennzeichnet durch zwei Sensoren (122, 123), die in Fahrtrichtung zueinander versetzt angeordnet sind.

9. Vorrichtung nach einem der Ansprüche 1 bis 8, dadurch gekennzeich net, daß die beiden Sensoren (122, 123) um eine halbe Polteilung der Statorwicklung (101) zueinander versetzt sind.

10. Vorrichtung nach einem der Ansprüche 1 bis 9, dadurch gekennzeich net, daß den Meßwicklungen (131) für die Pollagedekodierung ein Phasenregelkreis zur Bildung eines gefilterten Pollagevektors zugeordnet ist.

11. Vorrichtung nach Anspruch 10, dadurch gekennzeichnet, daß der Phasenregelkreis einen Regler (135) und einen durch dessen Ausgang gesteuerten Oszillator (136) mit nachgeschaltetem Sinus-Kosinus-Konverter (137) aufweist.

12. Vorrichtung nach Anspruch 1, dadurch gekennzeichnet, daß die Meßleiste (7) eine metallische Referenzfläche (8) mit definierter Lage zur Nutoberfläche des Statorblechpakets (1) eines Langstatorantriebs besitzt und
daß gegen diese Referenzfläche (8) der Luftspalt (6) zwischen Nutoberfläche des Statorblechpakets (1) und der Poloberfläche der Erregermagnete (3) gemessen wird und/oder
daß diese Meßleiste (7) eine Referenzfläche (10) besitzt und daß die Referenzfläche (10) in Ausbreitungsrichtung der von der Statorwicklung (2) erzeugten Strombelagswelle eine digitale Kodierung mit fester Lagezuordnung zur Statorwicklung trägt und daß diese definierte Lage durch in Zuordnung zur Nutung des Statorblechpakets (1) mit Hilfe von zusätzlichen am Statorblechpaket (1) eingebrachten Nuten und/oder entsprechender Ausbildung der Befestigungsteile für die Statorwicklung mit einheitlichen Montageteilen ohne zusätzliche Montageeinrichtungen genau und eindeutig erfolgt und daß die digitale Ortskodierung durch die Abfolge von elektrisch leitfähiger Beschichtung, elektrisch nichtleitendem Zwischenraum und elektrisch leitfähiger Beschichtung der Referenzfläche (10) gebildet wird und daß die digitale Ortskodierung mit einem oder mehreren induktiven Sensoren erfaßt wird und daß die geometrische Lage dieser Sensoren zum Maximum der Grundschwingung der Erregerwelle fest vorgegeben ist und daß die Ausgangssignale der Sensoren direkt oder nach erfolgter elektronischer Aufbereitung in die Information der Fahrzeuglage mit den daraus abgeleiteten Größen relative Lage des Erregersystems zur Langstatorwicklung (56), Fahrtrichtung (57), Fahrzeuggeschwindigkeit (66,67) Fahrzeugort (68), Lage der Abschnittsschalter (61), Weichenort (62), Phasenfolge der Langstatorwicklung (63) über einen Übertragungskanal (64) zum unterwerksseitigen Meßempfänger (65) übertragen wird.

13. Vorrichtung nach Anspruch 12, dadurch gekennzeichnet, daß die Meßeinrichtung (9) zur Messung des Luftspalts (6) aus einem induktiven Spaltsensor (14) mit einer Sendespule (15) und einer Empfängerspule (16) besteht und daß das Ausgangssignal der Empfängerspule (16) bandgefiltert (20), verstärkt (21) und demoduliert (22) wird und daß das demodulierte Signal (23) in einem Digital-Analogwandler (24) in digitale Adressworte (26) umgewandelt wird und
daß die Meßwerte des Luftspalts (6) in einem Festwertspeicher (27) unter diesen Adressworten abgelegt sind.

14. Vorrichtung nach einem der Ansprüche 12 oder 13, dadurch gekenn zeichnet,
daß die erste und zweite Ableitung des Luftspalts (6) nach der Zeit aus Festwertspeichern (31, 35) gelesen werden und daß die Adressworte (30, 34) der Festwertspeicher (31, 35) aus der Differenz zeitlich aufeinanderfolgender Meßwerte des Luftspalts bzw. der Luftspaltänderung gebildet werden.

15. Vorrichtung nach Anspruch 12, dadurch gekennzeichnet,
daß das induktive Sensorsystem zur Erfassung der Ortskodierung (10) aus einem Sendesystem (12) und einem Empfangssystem (13) besteht und
daß dieses System die Referenzfläche (10), welche die Ortskodierung trägt, gabelförmig umfaßt und
daß das Sendesystem (12) aus einer von einem Hochfrequenzgenerator (36) gespeisten Sendespule (37) besteht und
daß das Empfangssystem (13) aus einer Empfangsspule (38) mit nachgeschaltetem Bandfilter (39) und Demodulator (40) besteht.

16. Vorrichtung nach Anspruch 15, dadurch gekennzeichnet,
daß das Sendesystem (12) und/oder das Empfangssystem (13) aus mehreren Sendespulen und/oder Empfangsspulen besteht.

17. Vorrichtung nach Anspruch 15 oder 16, dadurch gekennzeichnet,
daß mehrere induktive Sensorsysteme (12, 13) zu Gruppen zusammengefaßt sind und
daß diese Sensorgruppen längs des Fahrzeugs symmetrisch zur Fahrzeugmitte angeordnet sind.

18. Vorrichtung nach Anspruch 12, dadurch gekennzeichnet,
daß das induktive Sensorsystem zur Erfassung der Ortskodierung (10) aus einer von einem Hochfrequenzgenerator gespeisten Sendespule besteht und
daß die Ortskodierung durch die Dämpfung des Sendesystems erfaßt wird.

19. Vorrichtung nach einem der Ansprüche 12 bis 18, dadurch gekenn zeichnet,
daß die Ausgangssignale (53) der induktiven Sensorsystem (12,13) in einer Auswerteelektronik (54) derart aufbereitet werden, daß aus den Ausgangssignalen (53) der induktiven Sensorsysteme durch eine Impulsaufbereitungsstufe (55) eine äquidistante Impulsfolge gebildet wird und
daß eine Relativlageelektronik (56) jeweils einen Nullimpuls am Ort der Phase R oder der Phase T oder der Phase S der Langstatorwicklung abgibt und
daß eine Fahrtrichtungselektronik (57) ein digitales Signal über die Fahrtrichtung abgibt und
daß die Zeitspanne zwischen zwei von der Impulsaufbereitungsstufe (55) abgegebenen Impulsen mit einer Zeitmeßeinrichtung (66) erfaßt wird und durch nachfolgende Division (67) der Wert der momentanen Fahrzeuggeschwindigkeit gebildet wird und
daß mit den Ausgangssignalen der Impulsaufbereitungsstufe (55), der Relativlageelektronik (56) und der Fahrtrichtungselektronik (57) mit einem Zähler (68) der momentane Fahrzeugort gebildet wird und daß Mustererkennungslogiken für den Ort eines Schaltabschnitts (61) und für den Ort und die Stellung von Weichen (62) und für die Phasenlage der Langstatorwicklung (63) vorgesehen sind.

**20.** Vorrichtung nach Anspruch 19, dadurch gekennzeichnet,

daß aus den Ausgangssignalen der Impulsaufbereitungsstufe (55) und der Relativlageelektronik (56) und der Fahrtrichtungselektronik (57) ein symmetrisches Zweiphasensystem oder Dreiphasensystem gebildet wird derart,

daß die vorgenannten Ausgangssignale mit einem Zähler (69) gezählt werden und dessen Ausgangssignale die Adressen für die nachgeschalteten Festwertspeicher (70, 71, 72) bilden und daß in diesen Festwertspeichern ein zwei- oder dreiphasiges Drehstromsystem tabellarisch abgelegt ist und daß an den Ausgängen der Festwertspeicher ein zwei- oder dreiphasiges Drehstromsystem (73) in digitaler Kodierung ansteht.

**21.** Vorrichtung nach einem der Ansprüche 12 bis 20, dadurch gekenn zeichnet,

daß das zwei- oder dreiphasige Drehstromsystem (73) mit frequenzunabhängiger Phasenverschiebung tiefpaßgefiltert wird, derart, daß das zwei- oder dreiphasige Drehstromsystem (73) mittels Digital-Analogwandlern (74, 75, 76) in analoge Größen umgewandelt und diese, sowie die Ausgangsgrößen (80, 81, 82) eines zwei- oder dreiphasigen spannungsgesteuerten Oszillators (83) über Multiplizierer (77, 78, 79) multiplikativ verknüpft und die entstehenden Produkte einem Summationsglied (84) zugeführt werden und

daß der Ausgang des Summationsglieds (84) mit einem Integrator (85) verbunden ist und

daß der Integrator (85) das Stellsignal (86) für den spannungsgesteuerten zwei- oder dreiphasigen Oszillator (83) liefert und daß die Ausgangsgrößen (80, 81, 82) dieses Oszillators (83) das tiefpaßgefilterte zwei- oder dreiphasige Drehstromsystem bildet.

**22.** Vorrichtung nach Anspruch 21, dadurch gekennzeichnet, daß der spannungsgesteuerte zwei- oder dreiphasige Oszillator (83) derart aufgebaut ist,

daß einem Betragsbildner (87) ein spannungsgesteuerter Oszillator (88) nachgeschaltet ist, dessen Ausgangsimpulse von einem Ringzähler (89) gezählt werden und

daß das Vorzeichen der Eingangsspannung (86) des Betragsbildners (87) von einem Komparator (90) erfaßt wird und daß der Komparator (90) die Zählrichtung des Ringzählers (89) bestimmt und daß dessen Ausgangssignale die Adressen für die nachgeschalteten Festwertspeicher (91, 92, 93) bilden und

daß in diesen Festwertspeichern ein zwei- oder dreiphasiges Drehstromsystem tabellarisch abgelegt ist und

daß an den Ausgängen der Festwertspeicher ein zwei- oder dreiphasiges Drehstromsystem (97) in digitaler Kodierung ansteht und

daß am Ausgang der nachgeschalteten Digital-Analogwandler (94, 95, 96) ein zwei- oder dreiphasiges Drehstromsystem (80, 81, 82) in analoger Kodierung ansteht.

## Claims

**1.** A device for incrementally locating the position of a magnetic-suspension vehicle, particularly with a long stator motor, with at least one measuring strip (7, 107) having a pole locus code (120, 121), extending in the direction of travel with a fixed positional association with the stator coil (1, 101), and with a sensor system, located on the vehicle, consisting of one or more sensors (13, 113), spaced apart in the direction of travel for detecting the pole locus code, characterised in that the measuring strip (7, 107), in addition to the pole locus code (120, 121), also has a vehicle absolute position code (124) in the form of a slot code (124) spaced longitudinally along the path of travel, and that a further sensor system is provided in order to detect the vehicle absolute position code, and that the sensors (13, 113, 122, 123) are arranged independently of the fields of the propulsive system, and have on the one hand measuring coils (131) for pole locus decoding and on the other hand measuring coils (133) for slot decoding, the measuring coils (131) for pole locus decoding being located at a different angle to the measuring strip (107) than the measuring coils (133) for slot decoding.

**2.** A device according to Claim 1, characterised in that the sensors (122, 123) are built up from U- or E-shaped cores, whose legs (128) are directed towards the measuring strip (107), and that the measuring coils (131) for pole locus decoding are located on the legs (128),
while the measuring coils (133) for slot decoding are located on the webs (132).

3. A device according to Claim 1 or 2, characterised in that at least two adjacent webs (132) carry a measuring coil (133) for slot decoding.

4. A device according to one of Claims 1 to 3, characterised in that the pole locus code consists of rectangular recesses (120) in the measuring strip (107), said recesses (120) being located at a distance from the pole pitch of the stator coil.

5. A device according to one of Claims 1 to 4, characterised in that the slot code (124) consists of wide slots (125), which are located on the tabs (121) remaining between the recesses (120).

6. A device according to one of Claims 1 to 5, characterised in that the number of slots (125) on each tab (121) is constant.

7. A device according to one of Claims 1 to 6, characterised in that the slots (125) are located flush right or flush left relative to a constant spacing grid (126).

8. A device according to one of Claims 1 to 7, characterised by two sensors (122, 123) which are offset to one another in the direction of travel.

9. A device according to one of Claims 1 to 8, characterised in that both sensors (122, 123) are offset to one another by half a pole pitch of the stator coil (101).

10. A device according to one of Claims 1 to 9, characterised in that there is associated with the measuring coils (131) for pole locus decoding a phase-shift control for forming a filtered pole locus vector.

11. A device according to Claim 10, characterised in that the phase-shift control has a control unit (135) with an oscillator (136) controlled by said regulator's output, with a following sine-cosine converter (137).

12. A device according to Claim 1, characterised in that the measuring strip (7) has a metallic reference surface (8) with a defined relative position to the groove surface of the stator lamination stack (1) of a long stator drive, and that that the air gap (6) between the groove surface of the stator lamination stack (1) and the pole surface of the energising magnets (3) is measured against this reference surface (8), and/or that this measuring strip (7) has a reference surface (10), and that said reference surface (10) carries, in the spreading direction of the current-density wave generated by the stator coil (2), a digital code with a fixed relative position to the stator coil, and that this fixed position is effected clearly and accurately without additional assembly components by means of grooves additionally provided in association with the grooving on the stator lamination stack (1) and/or corresponding formation of the attachment parts for the stator coil with integral assembly components, and that the digital local coding is formed by the sequence of electrically-conductive coating, electrically non-conductive interspace and electrically-conductive coating of the reference surface (10), and that the digital local coding is detected by one or more inductive sensors, and that the geometric position of these sensors is in a pre-established relationship to the maximum of the basic wave of the energising wave, and that the output signals of the sensors are transferred, directly or after execution of electronic editing, to the information regarding vehicle position with the data derived therefom, i.e. relative position of the energising system to the long stator coil (56), direction of travel (57), vehicle speed (66, 67) vehicle location (68), position of section switches (61), shunt location (62), phase sequence of the long stator coil (63), via a transmission channel (64) to the measuring receiver (65) at the substation.

13. A device according to Claim 12, characterised in that the measuring device (9) for measuring the air gap (6) consists of an inductive gap sensor (14) with a transmitter coil (15) and a receiver coil (16), and that the output signal of the receiver coil (16) is band-filtered (20), amplified (21) and demodulated (22), and that the demodulated signal (23) is converted into digital address words (26) in a digital-to-analog converter (24), and that the measurement values of the air gap (6) are deposited in a ROM (27) under these address words.

**14.** A device according to one of Claims 12 and 13, characterised in that the first and second differentiation of the air gap (6) in terms of time are read off from ROMs (31, 35), and that the address words (30, 34) of the ROMs (31, 35) are formed from the difference between chronologically successive measurement values of the air gap or of the air gap alteration.

**15.** A device according to Claim 12, characterised in that the inductive sensor system for detecting the local coding (10) consists of a transmitter system (12) and a receiver system (13), and that this system surrounds in a bifurcate fashion the reference surface (10) which carries the locus coding, and that the transmitter system (12) consists of a receiver coil (37) supplied from a high-frequency generator (36), and that the receiver system (13) consists of a receiver coil (38) with following band filter (39) and demodulator (40).

**16.** A device according to Claim 15, characterised in that the transmitter system (12) and/or the receiver system (13) consist of several transmitter coils and/or receiver coils.

**17.** A device according to Claim 15 or 16, characterised in that several inductive sensor systems (12, 13) are combined into groups, and that these sensor groups are located along the vehicle, symmetrically to the centre of the vehicle.

**18.** A device according to Claim 12, characterised in that the inductive sensor system for detecting the locus coding (10) consists of a transmitter coil supplied from a high-frequency generator, and that the locus coding is detected by the damping of the transmitter system.

**19.** A device according to one of Claims 12 to 18, characterised in that the output signals (53) of the inductive sensor systems (12, 13) are edited in an evaluation unit (54) in such a way that an equidistant pulse sequence is formed from the output signals (53) of the inductive sensor systems by a pulse-editing stage (55), and that a relative-position unit (56) in each case delivers a zero pulse at the locus of phase R or of phase T or of phase S of the long stator coil, and that a direction-of-travel unit (57) delivers a digital signal relating to the direction of travel, and that the time-span between two pulses delivered by the pulse-editing stage (55) is detected by a timer (66), and the value of the vehicle speed at any moment is formed by subsequent division (67), and that the vehicle locus at any moment is formed from the output signals from the pulse-editing stage (55), the relative-position unit (56) and the direction-of-travel unit (57) by means of a counter (68), and that pattern-recognition logics for the locus of a circuit section (61) and for the locus and position of shunts (62) and for the phase position of the long stator coil (63) are provided.

**20.** A device according to Claim 19, characterised in that a symmetrical two-phase system or three-phase system is formed from the output signals of the pulse-editing stage (55) and from the relative-position unit (56) and from the direction-of-travel unit (57), in such a way that the abovenamed output signals are counted by a counter (69), and the output signals therefrom form the address words for the following ROMs (70, 71, 72), and that a two- or three-phase current system is deposited in tabular form in these ROMs, and a two- or three-phase current system (73) is present at the outputs of the ROMs in digital code.

**21.** A device according to one of Claims 12 to 20, characterised in that the two- or three-phase current system (73) is low-pass filtered with frequency-independent phase displacement in such a way that the two- or three-phase current system (73) is converted by a digital-to-analog converter (74, 75, 76) into analog data and these, along with the output data (80, 81, 82) from a two- or three-phase voltage-controlled oscillator (83), are multiplicatively linked via multipliers (77, 78, 79), and the resultant products are passed to an adding member (84), and that the output from the adding member (84) is connected to an integrator (85), and that the integrator (85) delivers the position signal (86) for the voltage-controlled two- or three-phase oscillator (83), and that the output data (80, 81, 82) from this oscillator (83) forms the low-pass filtered two- or three-phase current system.

**22.** A device according to Claim 21, characterised in that the voltage-controlled two- or three-phase oscillator (83) is so constructed that an absolute-value former (87) is followed by a voltage-controlled oscillator (88), whose output pulses are counted by a ring counter (89), and that the digit sign of the input voltage (86) of the absolute-value former (87) is detected by a comparator (90), and that the comparator (90) determines the counting direction of the ring counter (89), and that its output signals form the addresses for the following ROMs (91, 92, 93), and that a two- or three-phase current system is deposited in tabular form in these ROMs, and that a two- or three-phase current system (97) is present at the outputs of the ROMs in digital code, and that a two- or three-phase current system (80, 81, 82) is present at the output of the following digital-to-analog converter (94, 95, 96) in analog code.

**Revendications**

1. Dispositif pour le repérage incrémental de la position d'un véhicule à sustentation magnétique, en particulier avec moteur à long stator, comprenant au moins une barrette de mesure (7, 107) munie d'un codage de la position des pôles (120, 121) et s'étendant dans la direction de marche avec association fixe de la position à l'enroulement du stator (1, 101), et un système de détection disposé sur le véhicule et composé d'un ou de plusieurs détecteurs (13, 113) disposés à distance les uns des autres dans le sens de la marche et servant à la détection du codage de la position des pôles, **caractérisé en ce** que la barrette de mesure (7, 107) présente, outre le codage de la position des pôles (120, 121), un codage de la position absolue du véhicule (124) sous la forme d'un codage à fentes (124) placé à distance dans le sens longitudinal du véhicule, qu'il est prévu un second système de détecteurs pour la détection du codage de la position absolue du véhicule et que les détecteurs (13, 113, 122, 123) sont disposés indépendamment des champs du système d'entraînement et comportent d'une part des enroulements de mesure (131) pour le codage de la position des pôles et d'autre part des enroulements de mesure (133) pour le codage à fentes, les enroulements de mesure (131) pour le codage de la position des pôles étant orientés sous un autre angle par rapport à la barrette de mesure (107) que les enroulements de mesure (133) pour le codage à fentes.

2. Dispositif selon la revendication 1, caractérisé en ce que les détecteurs (122, 123) sont constitués par des noyaux (127) en U ou en E dont les branches (128) sont dirigées vers la barrette de mesure (107), et que les enroulements de mesure (131) pour le codage de la position des pôles sont disposés sur les branches (128), alors que les enroulements de mesure (133) pour le codage à fentes sont disposés sur les dos (132).

3. Dispositif selon l'une des revendications 1 ou 2, caractérisé en ce qu'au moins deux dos (132) voisins portent un enroulement de mesure (133) pour le codage à fentes.

4. Dispositif selon l'une des revendications 1 à 3, caractérisé en ce que le codage de la position des pôles est constitué par des évidements rectangulaires (120) de la barrette de mesure (107) disposés suivant l'écartement polaire de l'enroulement du stator (1, 101).

5. Dispositif selon l'une des revendications 1 à 4, caractérisé en ce que le codage à fentes (124) est constitué de larges fentes (125) disposées sur les languettes (121) subsistant entre les évidements (120).

6. Dispositif selon l'une des revendications 1 à 5, caractérisé en ce que le nombre des fentes (125) sur chaque languette (121) est constant.

7. Dispositif selon l'une des revendications 1 à 6, caractérisé en ce que les fentes (125) sont cadrées à droite ou à gauche par rapport à une trame d'écartement (126) constante.

8. Dispositif selon l'une des revendications 1 à 7, caractérisé en ce qu'il comporte deux détecteurs (122, 123) décalés l'un par rapport à l'autre dans le sens de la marche.

9. Dispositif selon l'une des revendications 1 à 8, caractérisé en ce que les deux détecteurs (122, 123) sont décalés l'un par rapport à l'autre d'un demi-écartement polaire de l'enroulement du stator (101).

10. Dispositif selon l'une des revendications 1 à 9, caractérisé en ce qu'aux enroulements de mesure (131) pour le codage de la position des pôles est associé un circuit de déphasage pour la formation d'un vecteur de position de pôle filtré.

**11.** Dispositif selon la revendication 10, caractérisé en ce que le circuit de déphasage comprend un régulateur (135) et un oscillateur (136) commandé par la sortie de celui-ci et suivi d'un convertisseur sinus-cosinus (137).

**12.** Dispositif selon la revendication 1, caractérisé en ce que la barrette de mesure (7) présente une surface de référence métallique (8) avec une position définie par rapport à la surface d'encoche de l'empilage de tôles du stator (1) d'un moteur à stator long, et que l'entrefer (6) entre la surface d'encoche de l'empilage de tôles du stator (1) et la face polaire des aimants d'excitation (3) est mesuré par rapport à cette surface de référence (8) et/ou que cette barrette de mesure (7) comprend une surface de référence (10) et que la surface de référence (10) porte, dans le sens de la propagation de l'onde de densité de courant linéaire générée par l'enroulement du stator (2), un codage numérique avec association fixe à l'enroulement du stator; que cette position définie est réalisée de manière précise et univoque par des encoches supplémentaires mises en place sur l'empilage de tôles du stator (1) , en association avec les encoches de l'empilage de tôles du stator (1) et/ou par une conformation adéquate des éléments de fixation pour l'enroulement du stator avec des éléments de montage uniformes et sans dispositifs de montage supplémentaires; que le codage de lieu numérique est réalisé par la succession de revêtements électriquement conducteurs, d'intervalles électriquement non conducteurs et de revêtement électriquement conducteurs de la surface de référence (10); que le codage de lieu numérique est détecté au moyen d'un ou de plusieurs détecteurs inductifs; que la position géométrique de ces détecteurs par rapport au maximum de l'oscillation fondamentale de l'onde excitatrice est prédéterminée; et que les signaux de sortie des détecteurs sont transmis, directement ou après la transformation électronique en information sur la position du véhicule, avec les grandeurs qui en résultent : position relative du système d'excitation par rapport à l'enroulement du stator long (56), direction de marche (57) , vitesse du véhicule (66, 67), position du véhicule (68), position des interrupteurs de tronçons (61), position des aiguilles (62), ordre des phases de l'enroulement de stator long (63), au récepteur de mesure (65) du côté sous-station par l'intermédiaire d'un canal de transmission (64) .

**13.** Dispositif selon la revendication 12, caractérisé en ce que le dispositif de mesure (9) pour la mesure de l'entrefer (6) se compose d'un détecteur de fentes inductif (14) avec une bobine émettrice (15) et d'une bobine réceptrice (16); que le signal de sortie de la bobine réceptrice (16) passe par un filtre à bande passante (20) , un amplificateur (2l) et un démodulateur (22); que le signal démodulé (23) est transformé dans un convertisseur numérique-analogique (24) en mots d'adresse numériques (26); et que les valeurs mesurées de l'entrefer (6) sont stockées sous ces mots d'adresse dans une mémoire morte (27).

**14.** Dispositif selon l'une des revendications 12 ou 13, caractérisé en ce que les première et deuxième dérivées de l'entrefer (6) sont lues en fonction du temps dans les mémoires mortes (31, 35), et que les mots d'adresses (30, 34) des mémoires mortes (31, 35) sont formés à partir de la différence entre les valeurs de mesure de l'entrefer se succédant dans le temps et respectivement à partir de la variation de l'entrefer.

**15.** Dispositif selon la revendication 12, caractérisé en ce que le système de détecteurs inductifs pour la détection du codage de lieu (10) se compose d'un système d'émission (12) et d'un système de réception (13); que ce système entoure en forme de fourche la surface de référence (10) qui porte le codage de lieu; que le système d'émission (12) se compose d'une bobine émettrice (37) alimentée par un oscillateur haute fréquence (36) ; et que le système de réception (13) se compose d'une bobine réceptrice (38) suivie d'un filtre passe-bande (39) et d'un démodulateur (40).

**16.** Dispositif selon la revendication 15, caractérisé en ce que le système d'émission (12) et/ou le système de réception (13) se composent de plusieurs bobines émettrices et/ou bobines réceptrices.

**17.** Dispositif selon l'une des revendications 15 ou 16, caractérisé en ce que plusieurs systèmes de détecteurs inductifs (12, 13) sont réunis en groupes, et que ces groupes de détecteurs sont disposés le long du véhicule, symétriquement par rapport à l'axe médian du véhicule.

**18.** Dispositif selon la revendication 12, caractérisé en ce que le système de détecteurs inductifs pour la détection du codage de lieu (10) se compose d'une bobine émettrice alimentée par un oscillateur haute fréquence, et que le codage de lieu est détecté par l'atténuation du système d'émission.

19. Dispositif selon l'une des revendications 12 à 18, caractérisé en ce que les signaux de sortie (53) des systèmes de détecteurs inductifs (12, 13) sont traités dans une électronique d'analyse (54) de façon à former à partir des signaux de sortie (53) des systèmes de détecteurs inductifs, dans un étage de traitement d'impulsions (55), un train d'impulsions équidistantes; qu'une électronique de position relative (56) délivre respectivement une impulsion de mise à zéro au lieu de la phase R ou de la phase T ou de la phase S de l'enroulement du stator long; qu'une électronique de direction de marche (57) fournit un signal numérique indiquant la direction de marche; que l'intervalle entre deux impulsions fournies par l'étage de traitement d'impulsions (55) est détecté par un dispositif de mesure chronométrique (66) et que la valeur de la vitesse momentanée du véhicule est obtenue par la division consécutive (67); qu'à partir des signaux de sortie de l'étage de traitement d'impulsions (55), de l'électronique de position relative (56) et de l'électronique de direction de marche (57), un compteur (68) détermine le lieu momentané du véhicule; et que des circuits logiques de reconnaissance de modèles sont prévus pour le lieu d'un tronçon de commutation (61) ainsi que pour le lieu et la position d'aiguilles (62) et pour la position de phase de l'enroulement du stator long (63).

20. Dispositif selon la revendication 19, caractérisé en ce qu à partir des signaux de sortie de l'étage de traitement d'impulsions (55) de l'électronique de position relative (56) et de l'électronique de direction de marche (57), un système diphasé ou triphasé symétrique est formé de telle façon que lesdits signaux de sortie sont comptés par un compteur (69) dont les signaux de sortie constituent les adresses pour les mémoires mortes (70, 71, 72) placées en aval; qu'un système à courant diphasé ou triphasé est stocké sous forme de table dans ces mémoires mortes; et que les sorties des mémoires mortes délivrent en codage numérique un système de courant diphasé ou triphasé (73).

21. Dispositif selon l'une des revendications 12 à 20, caractérisé en ce que le système diphasé ou triphasé (73) est transmis avec un déphasage indépendant de la fréquence dans un filtre passe-bas, de sorte que le système diphasé ou triphasé (73) est transformé, au moyen de convertisseurs numériques-analogiques (74, 75, 76), en grandeurs analogiques, que celles-ci ainsi que les grandeurs de sortie (80, 81, 82) d'un oscillateur diphasé ou triphasé (83) commandé par tension sont combinées par multiplication par l'intermédiaire de multiplicateurs (77, 78, 79), que les produits obtenus sont transmis à un élément de totalisation (84) et que la sortie de l'élément de totalisation (84) est reliée à un intégrateur (85); que l'intégrateur (85) fournit le signal de réglage (86) pour l'oscillateur diphasé ou triphasé (83) commandé par tension; et que les grandeurs de sortie (80, 81, 82) dudit oscillateur (83) constituent le système diphasé ou triphasé passe-bas.

22. Dispositif selon la revendication 21, caractérisé en ce que l'oscillateur diphasé ou triphasé (83) commandé par tension est structuré de telle façon qu'un formateur de valeurs (87) est suivi d'un oscillateur (88) commandé par tension dont les signaux de sortie sont comptés par un compteur annulaire (89); que le signe de la tension d'entrée (86) du formateur de valeurs (87) est détecté par un comparateur (90) et que le comparateur (90) détermine le sens de comptage du compteur annulaire (89); que les signaux de sortie de ce dernier forment les adresses pour les mémoires mortes (91, 92, 93) placées en aval; qu'un système de courant diphasé ou triphasé est stocké dans lesdites mémoires mortes sous forme de table; que les sorties des mémoires mortes délivrent en codage numérique un système de courant diphasé ou triphasé (97); et que la sortie des convertisseurs numériques-analogiques (94, 95, 96) délivre en codage analogique un système de courant diphasé ou triphasé (80, 81, 82)

FIG. 1

FIG. 1a

EP 0 085 879 B1

FIG. 2

**FIG. 3**

**FIG. 4**

EP 0 085 879 B1

FIG. 5

FIG. 6

FIG. 7

EP 0 085 879 B1

FIG. 8

FIG. 9

FIG. 10

FIG. 11

FIG. 12

FIG. 13

FIG. 14

EP 0 085 879 B1

$$\underline{U}_{pm} = \hat{U} \left[ \cos \theta_m + j \sin \theta_m \right] = \hat{U} e^{j\theta_m}$$

$$\underline{U}_{pR} = \left[ \cos \theta_R - j \sin \theta_R \right] = e^{-j\theta_R} \qquad (Gl. 1)$$

$$\underline{U}_{pm} \cdot \underline{U}_{pR} = \hat{U} e^{j(\theta_m - \theta_R)}$$

$$= \hat{U} \left[ \cos (\theta_m - \theta_R) + j \sin (\theta_m - \theta_R) \right]$$

$$= U_d + j U_q$$

FIG. 15

FIG. 16

FIG. 17

FIG. 18

$$v_R = \frac{\tau_P}{\pi}\,\dot\theta_R$$